# EUROPÄISCHE PATENTSCHRIFT

(11) **EP 3 756 251 B1**
(45) Veröffentlichungstag und Bekanntmachung des Hinweises auf die Patenterteilung: **10.05.2023**
(21) Anmeldenummer: 19720766.5
(22) Anmeldetag: 22.03.2019
(51) Int. Cl.: H02B 3/00

(54) **VERFAHREN FÜR DIE BEARBEITUNG MINDESTENS EINES SCHALTSCHRANKS**
METHOD FOR PROCESSING AT LEAST ONE ELECTRICAL CABINET
PROCÉDÉ DE TRAITEMENT D'AU MOINS UNE ARMOIRE ÉLECTRIQUE

(30) Priorität: 20.04.2018 DE 102018109606
(43) Veröffentlichungstag der Anmeldung: 30.12.2020
(73) Patentinhaber: Rittal GmbH & Co. KG, 35745 Herborn (DE)
(72) Erfinder: HAIN, Markus, 35684 Dillenburg (DE); HOLIGHAUS, Heiko, 35713 Eschenburg (DE); BOEHME, Siegfried, 06766 Wolfen (DE); MARTIN, Lars, 35516 Münzenberg (DE)
(74) Vertreter: Angerhausen, Christoph
(86) Internationale Anmeldenummer: PCT/DE2019/100274
(87) Internationale Veröffentlichungsnummer: WO 2019/201377

(56) Entgegenhaltungen:
- WO-A1-2017/191059
- DE-A1-102007 052 125
- US-A1- 2011 187 503
- US-A1- 2014 253 289

## Beschreibung

Die Erfindung betrifft ein Verfahren für die Bearbeitung mindestens eines Schaltschranks gemäß dem Oberbegriff des Anspruchs 1. Ein solches Verfahren ist aus der WO 2017/191059 A1 bekannt. Ähnliche Verfahren beschreiben auch die DE 10 2007 052 125 A1, die US 2011/187503 A1 und die US 2014/253289 A1.

Das Verfahren weist unter anderem das Bereitstellen mindestens eines Schaltschranks auf, der mehrteilig aufgebaut ist und mindestens ein abnehmbar montiertes Bauteil aufweist. Beispielsweise weist ein Schaltschrank üblicherweise ein Schaltschrankrahmengestell mit daran befestigten Flachteilen auf, beispielsweise Seitenwände, ein Türelement, ein Dachelement, und eine in dem Schaltschrank montierte Montageplatte. Die Flachteile und die Montageplatte sind üblicherweise lösbar mit dem Rahmengestell verbunden, etwa über Schraubverbindungen, wobei das Rahmengestell die tragende Struktur des Schaltschranks bildet. Ein solcher Schaltschrank, bestehend aus einem Rahmengestell, daran befestigten Flachteilen sowie einer im Innern des Schaltschranks montierten Montageplatte ist ein gängiges Großserienprodukt eines Schaltschrankherstellers.

Schaltschränke werden zur Aufnahme von Schaltanlagen verwendet, die je nach Anwendungsfall sehr unterschiedlich ausgestaltet sein können und dementsprechend auch unterschiedliche Anforderungen an die Beschaffenheit des Schaltschranks stellen können. Beispielsweise ist es je nach Art der Schaltanlage erforderlich, dass die Schaltanlage gekühlt wird, wozu beispielsweise in einer Seitenwand des Schaltschrankgehäuses ein Durchbruch ausgebildet werden muss, über den ein an oder in der Seitenwand montiertes Kühlgerät erwärmte Luft aus dem Schaltschrankgehäuse ansaugt und als gekühlte Luft in das Schaltschrankgehäuse zurück bläst. Wenn der Schaltschrank beispielsweise in einem Rechenzentrum verwendet werden soll, kann es vorgesehen sein, dass der Schaltschrank in eine Schaltschrankreihe gleichartiger Schaltschränke eingereiht wird, wobei die Schaltschränke der Schaltschrankreihe nicht nur mechanisch miteinander in Verbindung stehen, sondern darüber hinaus häufig auch einen mehrere Schaltschränke übergreifenden und durchgängigen Montageraum für die Anordnung von beispielsweise Servereinschüben und dergleichen bilden. Beispielsweise ist es üblich, dass eine Stromversorgung der Schaltschrankreihe über eine durchgehende Stromsammelschienenanordnung bereitgestellt wird, die sich durch sämtliche Schaltschränke der Schaltschrankreihe hindurch erstreckt, um eine Stromversorgung der jeweils in den Schaltschränken aufgenommenen elektrischen und/oder elektronischen Komponenten einer elektrischen Schaltanlage bereitzustellen. Obwohl eine IT-Infrastruktur nach dem Sprachgebrauch keine elektrische Schaltanlage ist, soll sie vorliegend von dem Begriff elektrische Schaltanlage mitumfasst sein, um die Darstellung der Erfindung zu vereinfachen.

Dies hat zur Folge, dass der vom Schaltschrankhersteller als Serienprodukt bereitgestellte Schaltschrank bis zu seiner tatsächlichen Anwendung beim Endanwender einer erheblichen Individualisierung unterzogen werden muss, und dies betrifft sowohl die mechanische Beschaffenheit des Schaltschranks als auch die im Schaltschrank aufgenommene Schaltanlage. Dies hat dazu geführt, dass sich in der Wertschöpfungskette zwischen Schaltschrankhersteller und dem Endanwender des Schaltschrankgehäuses, beispielsweise eines Maschinenbauers, welcher mit Hilfe der in dem Schaltschrank aufgenommenen Schaltanlage eine Maschine ansteuert, ein Wirtschaftszweig um den Schaltanlagenbau herum gebildet hat, welcher darauf spezialisiert ist, von dem Schaltschrankhersteller standardisierte Serienschaltschränke zu beziehen, mit der vom Endkunden geforderten Schaltanlage zu bestücken und dabei den Schaltschrank in dem jeweils erforderlichen Maß durch mechanische, meist spanende Nachbearbeitung zu individualisieren.

Diese Individualisierung ist häufig damit verbunden, dass das mindestens eine abnehmbare und nachzubearbeitende Bauteil des Schaltschranks, beispielsweise ein Flachteil oder eine Montageplatte von dem Schaltschrank, vorzugsweise von dem Rahmengestell des Schaltschranks, demontiert und von dem Schaltschrank entfernt wird, um das Bauteil einer Bearbeitungsstation zur Individualisierung zuzuleiten, beispielsweise zur Einbringung von Durchbrüchen oder Gewindedurchlässen in dem Flachteil oder in der Montageplatte.

Auch für die Bestückung der Montageplatte mit der Schaltanlage wird die Montageplatte aus dem Schaltschrank entfernt und manuell oder automatisiert mit den elektrischen und/oder elektronischen Komponenten der elektrischen Schaltanlage versehen, einschließlich Verdrahtung der Komponenten sowie Funktionsprüfung der Schaltanlage. Es findet somit mindestens ein Bearbeitungsschritt des abnehmbar montierten Bauteils statt, wenn dieses von dem Schaltschrank demontiert und entfernt worden ist. Anschließend wird das bearbeitete Bauteil für die Wiedermontage an dem dazugehörigen Schaltschrank zur Verfügung gestellt. Um eine Wiederzuordnung des für die Wiedermontage bereitgestellten bearbeiteten Bauteils exakt dem zugehörigen Schaltschrank zu ermöglichen, ist es bisher üblich, die abnehmbaren Bauteile und den Schaltschrank temporär zu kennzeichnen, beispielsweise mit Hilfe manuell aufgebrachter Markierungen. Dies ist entsprechend umständlich und fehlerbehaftet.

Es ist daher die Aufgabe der Erfindung, ein Verfahren für die Bearbeitung mindestens eines Schaltschranks bereitzustellen, welches einfach in der Durchführung und fehlerunanfällig ist.

Diese Aufgabe wird durch ein Verfahren mit den Merkmalen des Anspruchs 1 gelöst. Die abhängigen Ansprüche betreffen jeweils vorteilhafte Ausführungsformen der Erfindung.

Demgemäß ist vorgesehen, dass der erste Datensatz mechanische Konstruktionsinformationen eines Lochbilds für eine in dem Schaltschrank zu erstellende Schaltanlage oder für die Montage eines Schaltschrankklimageräts aufweist, wobei das Herstellen des abnehmbar montierten Bauteils das mechanische Bearbeiten des abnehmbar montierten Bauteils zur Herstellung des Lochbilds aufweist.

Beispielsweise können bei dem Bereitstellen mindestens zwei identische Schaltschränke bereitgestellt werden, beispielsweise zwei Schaltschränke, die dem Serienprodukt einer bestimmten Artikelnummer eines Schaltschrankherstellers entsprechen. Die beiden Schaltschränke werden sich daher in ihrer Beschaffenheit nicht voneinander unterscheiden. Die beiden Schaltschränke können insbesondere ein Schaltschrankrahmengestell mit daran festgelegten Flachteilen aufweisen. Die Rahmengestelle der beiden Schaltschränke, ebenso wie die Montageplatten und die Flachteile werden sich somit jeweils untereinander nicht voneinander unterscheiden. Mindestens eines der genannten abnehmbar montierten Bauteile des Schaltschranks kann die Schaltschrankkennzeichnung aufweisen, gegebenenfalls zusätzlich zu einer Bauteilkennzeichnung, wenn es sich bei dem die Schaltschrankkennzeichnung aufweisenden Bauteil um ein abnehmbar an dem Schaltschrank montiertes Bauteil handelt, beispielsweise um ein Flachteil, etwa die Schaltschranktür. So kann jeder der beiden von dem Schaltschrankhersteller gelieferten Serienschaltschränke ein Bauteil aufweisen, welches zumindest die Schaltschrankkennzeichnung aufweist. Zumindest ein Bauteil der übrigen an dem jeweiligen Schaltschrank lösbar montierten Bauteile kann eine Bauteilkennzeichnung aufweisen, die der jeweiligen Schaltschrankkennzeichnung zugeordnet ist.

Es kann auch vorgesehen sein, dass ein Rahmengestell des jeweiligen Schaltschranks keine Bauteilkennzeichnung aufweist, da das Rahmengestell grundsätzlich keine Bearbeitung erfährt und daher bei einer Mehrzahl Schaltschränke eine individuelle Zuordnung eines bestimmten Rahmengestells einem bestimmten Schaltschrank, mithin einer bestimmten Schaltschrankkennzeichnung, nicht erforderlich ist. Aus Konsistenzgründen ist jedoch denkbar, dass auch das Schaltschrankrahmengestell eine Bauteilkennzeichnung aufweist, die der Schaltschrankkennzeichnung zugeordnet ist.

Das Bauteil des Schaltschranks, welches die Schaltschrankkennzeichnung aufweist, welcher die verschiedenen abnehmbar an dem Schaltschrank montierten Bauteile des Schaltschranks über ihre jeweilige Bauteilkennzeichnung zugeordnet sind, hat somit die Funktion eines Referenzbauteils oder eines Masterbauteils eines bestimmten Schaltschranks, dem über die jeweilige Bauteilkennzeichnung bestimmte weitere abnehmbar montierte Bauteile des bestimmten Schaltschranks zugeordnet sind.

Auf diese Weise ist es möglich, dass bei mehreren baugleichen Schaltschränken nach der Demontage der abnehmbar montierten Bauteile sowie gegebenenfalls einer Bearbeitung zumindest eines der demontierten Bauteile wieder diejenigen Bauteile an demselben Schaltschrank zusammenfinden, welche ursprünglich vor der Nachbearbeitung bereitgestellt worden waren. Gerade bei hochgradig individuell nachbearbeiteten Schaltschrankbauteilen, wie Flachteilen des Schaltschranks, ist mit Hilfe der zuvor beschriebenen Zuordnung gewährleistet, dass nach der Bearbeitung der demontierten Bauteile und der Wiederzuordnung der bearbeiteten Bauteile dem dazugehörigen Schaltschrank tatsächlich auch wieder exakt die vor der Demontage den Schaltschrank bildenden Bauteile wieder zusammenfinden.

Das Bereitstellen des mindestens einen Schaltschranks kann das Herstellen des Schaltschranks aufweisen, wobei bei der Herstellung des Schaltschranks das abnehmbar montierte Bauteil des Schaltschranks mit der Bauteilkennzeichnung und das mindestens eine weitere Bauteil des Schaltschranks mit der Schaltschrankkennzeichnung unabhängig voneinander hergestellt und nach ihrer Herstellung durch Einlesen der Kennzeichnungen erstmalig einander zugeordnet werden.

Das Bereitstellen oder das Demontieren und Entfernen des abnehmbar montierten Bauteils des Schaltschranks weist das Erzeugen eines ersten Datensatzes auf, der einen Ziel-Bearbeitungszustand des Bauteils beschreibt, wobei der erste Datensatz über die Bauteilkennzeichnung dem Bauteil zugeordnet ist, und das Hinterlegen des ersten Datensatzes für den Fernzugriff.

Auf diese Weise ist es beispielsweise auch möglich, dass bereits bei der Schaltschrankherstellung durch den Schaltschrankhersteller Individualisierungsmaßnahmen an dem Serienprodukt vorgenommen werden, beispielsweise Ausbrüche in Flachteilen oder in der Montageplatte ausgebildet werden.

Es ist möglich, dass der erste Datensatz, der den Zielbearbeitungszustand des Bauteils beschreibt, bereits vor der Herstellung des Schaltschranks, oder während dessen, beispielsweise von einem Schaltanlagenbauer an den Schaltschrankhersteller übermittelt wird. Ebenso kann der Ziel-Bearbeitungszustand in Form einer CAD-Konstruktion von dem Schaltanlagenbauer an den Schaltschrankhersteller übermittelt werden, der daraus den ersten Datensatz erzeugt und bei der Herstellung des abnehmbar montierten Bauteils der Bauteilkennzeichnung des Bauteils zuordnet. Ebenso kann es beispielsweise vorgesehen sein, dass ein Schaltanlagenbauer eine CAD-Konstruktion an den Schaltschrankhersteller übermittelt, die zumindest die mechanische Nachbearbeitung des Serienschaltschranks betrifft, beispielsweise die Ausbildung mindestens eines Durchbruchs in mindestens einem Flachteil des Schaltschranks. Der Schaltschrankhersteller kann dann aus der die Nachbearbeitung des Schaltschranks betreffenden CAD-Konstruktion für jedes der von der Nachbearbeitung betroffenen Bauteil des Schaltschranks einen ersten Datensatz erzeugen, oder einen gemeinsamen Datensatz, der den Zielbearbeitungszustand des betreffenden Bauteils beschreibt, wobei der jeweilige erste Datensatz dann über die jeweilige Bauteilkennzeichnung dem jeweiligen Bauteil zugeordnet wird, beispielsweise sobald in der Rohfertigung der Bauteile des Schaltschranks das jeweils betreffende Bauteil hergestellt und mit der das Bauteil individuell kennzeichnenden Bauteilkennzeichnung versehen worden ist. Es ist somit möglich, dass bereits im frühestmöglichen Herstellungsprozess des Schaltschranks den Einzelbauteilen des Schaltschranks die die Nachbearbeitung des betreffenden Bauteils betreffende Information über die Verknüpfung mit der Bauteilkennzeichnung zugeordnet wird. Das Schaltschrankbauteil kann somit bereits in der Rohfertigung ein hohes Maß an Individualisierung erfahren, sei es auch nur durch die Zuordnung eines das bauteil betreffenden Datensatzes zu dem Bauteil.

Es ist beispielsweise möglich, dass die gegenüber dem Serienprodukt nachzubearbeitenden Bauteile des Schaltschranks vor ihrem ersten Zusammenfügen zu einem Schaltschrank eine individuelle Nachbearbeitung erfahren, so dass das vom Schaltschrankhersteller beim Schaltanlagenbauer angelieferte Schaltschrankprodukt gegenüber dem Serienprodukt ein gewisses Maß der Individualisierung, beispielsweise in Form von Ausbrüchen in Flachteilen, aufweist.

Aber auch bei der Serienproduktion kann die erfindungsgemäße Kennzeichnung des Schaltschranks und des mindestens einen abnehmbaren Bauteils Vorteile aufweisen, beispielsweise indem über den der Bauteilkennzeichnung zugeordneten Datensatz mindestens ein das Bauteil betreffender Herstellungsschritt vorgegeben wird, beispielsweise eine vorgesehene Lackierung des Bauteils, eine vorgesehene Schäumung zur Ausbildung eines Dichtelements, eine vorgesehene Verschlussfunktion zur Anbringung in der Endmontage und dergleichen.

Das Erzeugen des den Ziel-Bearbeitungszustand beschreibenden ersten Datensatzes kann das Hinterlegen mindestens eines Bearbeitungsschritts in dem ersten Datensatz aufweisen, der erforderlich ist, um das Bauteil aus seinem Ist-Zustand in den Ziel-Bearbeitungszustand zu überführen. Der Ziel-Bearbeitungszustand kann sich von einem Endbearbeitungszustand unterscheiden.

Das Herstellen des Schaltschranks kann das Herstellen des abnehmbar montierten Bauteils in der Serienfertigung umfassen, wobei das Verfahren dabei weiterhin die Schritte aufweisen kann:
- Erfassen der Bauteilkennzeichnung des abnehmbar montierten Bauteils in der Serienfertigung;
- Einlesen des ersten Datensatzes und Erfassen des Ziel-Bearbeitungszustands oder des mindestens eines Bearbeitungsschritts;
- Aussondern des abnehmbar montierten Bauteils aus der Serienfertigung und Zuleiten des abnehmbar montierten Bauteils einer Bearbeitungsstation, wobei in der Bearbeitungsstation der mindestens eine Bearbeitungsschritt und/oder ein weiterer Bearbeitungsschritt durchgeführt wird, um das abnehmbar montierte Bauteil dem Ziel-Bearbeitungszustand anzunähern; und
- nach der Durchführung des Bearbeitungsschritts, Wiedereingliedern des abnehmbar montierte Bauteils in die Serienfertigung.

Wenn das Herstellen des Schaltschranks das Herstellen des abnehmbar montierten Bauteils in der Serienfertigung aufweist, wobei das abnehmbar montierte Bauteil mehrere Bearbeitungsstationen durchlaufen kann, kann an mindestens einer Bearbeitungsstation die Bauteilkennzeichnung des abnehmbar montierten Bauteils ausgelesen werden, der der Bauteilkennzeichnung zugeordnete erste Datensatz erfasst werden, unter Berücksichtigung des ersten Datensatzes und einer darin gegebenenfalls enthaltenen CAD-Konstruktion mindestens ein Bearbeitungsschritt durchgeführt werden, um das Bauteil dem Ziel-Bearbeitungszustand zumindest anzunähern. Ein aktualisierter Bearbeitungszustand kann dabei in dem ersten Datensatz und der erste Datensatz für den Fernzugriff hinterlegt werden.

Das Verfahren kann somit auch eine Dokumentation durchgeführter Bearbeitungsschritte in dem ersten Datensatz aufweisen. Der erste Datensatz kann somit während der Herstellung des Bauteils zwischen verschiedenen Bearbeitungsstationen den jeweils aktuellen Bearbeitungszustand des betreffenden Bauteils wiedergeben. Dadurch wird erreicht, dass anhand des ersten Datensatzes zu jedem Zeitpunkt der Herstellung ein erwarteter Bearbeitungserfolg, mithin eine Annäherung an den Ziel-Bearbeitungszustand, des abnehmbar montierten Bauteils überwacht werden kann.

Der erste Datensatz weist zur Bearbeitung des abnehmbar montierten Bauteils mechanische Konstruktionsinformationen eines Lochbilds auf, etwa einer Montageplatte oder eines Flachteils, zum Beispiel für eine auf der Montageplatte zu erstellende Schaltanlage oder für die Montage eines Schaltschrankklimageräts in oder an einem Flachteil. Die Konstruktionsinformationen können beispielsweise als CAD-Daten bereitgestellt werden. Das Herstellen des abnehmbar montierten Bauteils kann das mechanische Bearbeiten des abnehmbar montierten Bauteils, einschließlich Lasern, zur Herstellung des Lochbilds aufweisen. Das montierte Bauteil kann beispielsweise eine Montageplatte sein, die ein Lochbild zur Ausbildung der elektrischen Schaltanlage auf der Montageplatte aufweist. Das montierte Bauteil kann beispielsweise eine Seitenwand des Schaltschranks sein, in die ein Lochbild eingebracht wird, um ein Schaltschrankklimagerät an oder in der Seitenwand des Schaltschranks zu montieren und mit dem Inneren des Schaltschranks fluidisch zu verbinden.

Das Verfahren kann weiterhin das Erzeugen eines zweiten Datensatzes aufweisen, der über die Schaltschrankkennzeichnung dem Schaltschrank zugeordnet und für den Fernzugriff hinterlegt wird, wobei der zweite Datensatz einen Schaltplan einer in dem Schaltschrank zu erstellenden oder bereits erstellten Schaltanlage aufweist. Der zweite Datensatz kann aus dem ersten Datensatz erzeugt werden, etwa durch Anreicherung der den Schaltplan betreffenden Daten.

Durch die eindeutige Kennzeichnung des Schaltschranks ist es möglich, eine eindeutige Zuordnung zwischen einem Schaltschrank und einer in dem Schaltschrank zu erstellenden oder bereits erstellten Schaltanlage herzustellen. Vor der Erstellung der Schaltanlage im Schaltschrank kann somit bereits dem "leeren" Schaltschrank die in ihm zu erstellende Schaltanlage zugeordnet werden, zumindest in Form eines die Schaltanlage beschreibenden Schaltplans sowie gegebenenfalls weiterer Informationen, etwa eine Komponentenstückliste. Dadurch wird die Logistik des Schaltanlagenbauers, welcher zur Herstellung der Schaltanlage den Schaltschrank an unterschiedlichen Bearbeitungsstationen seiner Fertigunglinie verschiedensten Nachbearbeitungen unterziehen muss, wesentlich vereinfacht.

Da die elektrische Schaltanlage nach ihrer Erstellung dem Schaltschrank, in dem sie aufgenommen ist, schon aufgrund der hohen Individualisierung des Schaltschranks fest zugeordnet ist, kann eine eindeutige Kennzeichnung der Schaltanlage über die Schaltschrankkennzeichnung desjenigen Schaltschranks erfolgen, in welchem sie aufgenommen ist.

So kann beispielsweise ein der Schaltschrankkennzeichnung zugeordneter zweiter Datensatz erzeugt werden, der einen Schaltplan der in dem Schaltschrank aufgenommenen Schaltanlage aufweist. Alternativ kann der zweite Datensatz weitere Informationen betreffend die Schaltanlage aufweisen, beispielsweise eine Komponentenstückliste, ein Wartungsplan oder dergleichen. Dies ermöglicht es auch, dass bei einer Veränderung der Schaltanlage oder im Wartungsfall entsprechende Maßnahmen, die unter anderem auch eine entsprechende Anpassung des Schaltplans umfassen können, in dem zweiten Datensatz dokumentiert und für den Fernzugriff hinterlegt werden. Die Führung eines papiernen Schaltplans sowie einer papiernen Wartungshistorie ist somit nicht mehr erforderlich. Aufgrund der festen Zuordnung zwischen Schaltschrankkennzeichnung und Schaltanlage wird auch einer Verwechslung zwischen Schaltplan und tatsächlicher Schaltanlage sowie dem Verlust des Schaltplans, was bei papierner Dokumentation durchaus möglich ist, entgegengewirkt. Der zweite Datensatz kann durch Modifizieren, insbesondere durch Anreichern des ersten Datensatzes, aus dem ersten Datensatz erhalten werden.

Das Verfahren kann weiterhin das Ändern des Schaltplans entsprechend einer erfassten Änderung der Schaltanlage und das Aktualisieren des zweiten Datensatzes aufweisen, so dass der aktualisierte zweite Datensatz den geänderten Schaltplan aufweist. Das Erfassen einer Änderung einer Schaltanlage kann manuell über eine Mensch-Maschinen-Schnittstelle oder beispielsweise teilautomatisiert erfolgen, etwa mit einer optischen oder Komponentenerkennung.

Bei der teilautomatisierten Erfassung kann vorgesehen sein, dass sämtliche Komponenten der elektrischen Schaltanlage, oder zumindest ein Teil der elektrischen Komponenten der Schaltanlage, eine individuelle Komponentenkennzeichnung aufweisen. Diese sollte vorzugsweise berührungslos und besonders bevorzugt optisch auslesbar sein und kann beispielsweise in Form eines QR-Codes bereitgestellt sein, sie ist jedoch nicht auf QR-Codes beschränkt. Mit Hilfe einer solchen, beispielsweise optischen Erfassung kann bestimmt werden, welche Komponenten die Schaltanlage aufweist, zumindest soweit die Komponenten entsprechend mit einer Komponentenkennzeichnung versehen sind. Der zweite Datensatz kann beispielsweise eine Komponentenliste der Schaltanlage aufweisen, die anhand der erfassten Komponenten aktualisiert werden kann, wenn sich beispielsweise bei einer Überarbeitung der Schaltanlage oder im Wartungsfall eine Veränderung der Komponentenbestückung der Schaltanlage ergibt. So kann es beispielsweise vorgesehen sein, dass das Erfassen einer Änderung der Schaltanlage das Erfassen der Komponentenkennzeichnungen der Komponenten der elektrischen Schaltanlage aufweist, wobei über einen Abgleich der erfassten Komponentenkennzeichnungen mit dem Schaltplan eine Veränderung einer Komponentenbestückung der elektrischen Schaltanlage erfasst werden kann.

Mit Hilfe der Komponentenkennzeichnung ist jedoch grundsätzlich auch über die Bereitstellung einer Stückliste hinaus eine Erfassung der relativen Anordnung der Komponenten zueinander möglich. Dazu kann vorgesehen sein, dass das Verfahren das zumindest teilweise optische oder elektromagnetische Erfassen eines Innenraums des Schaltschranks, insbesondere einer Montageseite einer Montageplatte, an der die elektrische Schaltanlage angeordnet ist, aufweist, wobei das Erfassen das Erfassen mindestens einer Komponentenkennzeichnung mindestens einer Komponente der Schaltanlage aufweist, wobei das Erfassen neben dem Erfassen der Komponentenkennzeichnung weiterhin das Erfassen einer Ortsinformation der Komponente relativ zu zumindest einer weiteren Komponente der Schaltanlage mit einer weiteren Komponentenkennzeichnung aufweist. Das Erfassen kann weiterhin das Erfassen einer korrekten Positionierung mindestens einer Komponente der Schaltanlage aufweisen. Dies kann das Abgleichen eines 2D- oder 3D-Layouts mit den erfassten Ortsinformationen aufweisen. Das Erfassen kann weiterhin das Erfassen der Vollständigkeit der elektrischen Schaltanlage aufweisen. Dazu kann eine Komponentenliste mit den erfassten Komponenten abgeglichen werden.

Die die Komponentenkennzeichnung aufweisenden elektrischen Komponenten der Schaltanlage können auch die Verdrahtung der elektrischen Schaltanlage umfassen. Beispielsweise kann ein zwischen einer ersten und einer zweiten Komponente geführter und diese elektrisch verbindender Draht an seinen gegenüberliegenden Enden, mit welcher er an die erste Komponente beziehungsweise an die zweite Komponente angeschlossen ist, jeweils eine den Draht und gegebenenfalls sogar eine das jeweilige Ende kennzeichnende Komponentenkennzeichnung aufweisen, so dass mit Hilfe des Verfahrens auch die Verdrahtung der Komponenten und gegebenenfalls ein Abgleich der erfassten Verdrahtung mit einer in einem Schaltplan hinterlegten Verdrahtung abgeglichen und gegebenenfalls eine Abweichung oder Änderung dokumentiert werden kann. Der Schaltplan kann wiederum über die Schaltschrankkennzeichnung oder auch über eine Bauteilkennzeichnung der Montageplatte, auf welcher die Schaltanlage ausgebildet ist, die von dem Schaltplan beschrieben wird, als Datensatz für den Fernzugriff hinterlegt werden.

Das Verfahren kann weiterhin das Erstellen einer elektrischen Schaltanlage in dem Schaltschrank, ausgehend von einer CAD-Konstruktion der Schaltanlage aufweisen, die über die Schaltschrankkennzeichnung dem Schaltschrank zugeordnet ist, wobei Datenblattinformationen von elektrischen Komponenten der elektrischen Schaltanlage mit Informationen über deren Verschaltung in der elektrischen Schaltanlage verknüpft und in einer zentralen Archivdatenbank unter der Schaltschrankkennzeichnung in mindestens einem Datensatz hinterlegt werden.

Das Verfahren kann weiterhin das technische Abnehmen der Schaltanlage aufweisen, wobei zu dem mindestens einen Datensatz Test- und Abnahmeinformationen der Schaltanlage hinzugefügt werden. Bei Vollständigkeit erforderlicher Test- und Abnahmeinformationen kann eine Inbetriebnahmefreigabe für die Schaltanlage ausgelöst werden. Daraufhin kann das Inbetriebnehmen der Schaltanlage erfolgen, wobei dem mindestens einen Datensatz Inbetriebnahmeinformationen der Schaltanlage vorzugsweise über eine Mensch-Maschine-Schnittstelle hinzugefügt werden.

Die Schaltschrankkennzeichnung kann somit während der verschiedenen Stadien der Erstellung einer Schaltanlage und sogar bereits bei der Herstellung des die Schaltanlage zukünftig einmal aufnehmenden Schaltschranks dazu dienen, die mit der Erstellung und Inbetriebnahme der Schaltanlage erforderlichen Maßnahmen einander zuzuordnen. So ist es grundsätzlich denkbar, dass bereits vor der Herstellung des Schaltschranks und vor der Erstellung der Schaltanlage mit Hilfe geeigneter Konstruktionstools, beispielsweise MCAD- und ECAD-Tools, eine vollständige Konstruktion der Schaltanlage sowie des die Schaltanlage aufnehmenden Schaltschranks erzeugt wird, einschließlich Informationen betreffend die technische Abnahme der Schaltanlage sowie die Inbetriebnahme der Schaltanlage, die jedoch im Einzelnen zu ganz verschiedenen Stadien im Lebenszyklus des Schaltschranks beziehungsweise der Schaltanlage zum Tragen kommt. Diese vollständige Konstruktion der Schaltanlage kann über die eindeutige Schaltschrankkennzeichnung und über die mir dieser verknüpften Bauteilkennzeichnungen einem bestimmten Schaltschrank sowie dessen Bauteilen zugeordnet werden, so dass in jedem Stadium des Schaltschranks beziehungsweise der Schaltanlage, von der Herstellung über den Betrieb bis zur Entsorgung, die jeweils erforderliche Information aus dem den Kennzeichnungen zugeordneten Informationsbündel von dem jeweils betreffenden Shareholder abgefragt werden.

So kann das Verfahren weiterhin nach der Inbetriebnahme der Schaltanlage die Durchführung einer Wartung oder Reparatur der Schaltanlage sowie das Hinzufügen von Wartungsinformationen oder Reparaturinformationen dem mindestens einen in der Archivdatenbank hinterlegten Datensatz aufweisen. Das Verfahren kann weiterhin das Durchführen einer Reparatur der Schaltanlage aufweisen, wobei auf eine dreidimensionale CAD-Konstruktion der Schaltanlage zurückgegriffen wird.

Das Auslösen einer Inbetriebnahmefreigabe kann das Verbinden mindestens einer Energiequelle zu der Schaltanlage und/oder mindestens einer Verbindung vom Schaltschrank zur Schaltanlage aufweisen, um diese zu aktivieren. Erfolgt die Inbetriebnahme nach erteilter Inbetriebnahmefreigabe der Schaltanlage, kann der mindestens eine Datensatz in der Archivdatenbank um ergänzende Inbetriebnahmeinformationen der elektrischen Schaltanlage weiter angereichert werden.

Es ist somit möglich, bereits zum Zeitpunkt der Herstellung der elektrischen Schaltanlage eine Dokumentation aufzubauen, welche eine höhere Informationstiefe als eine übliche Schaltschrankmappe in Papierform bietet, indem nicht nur die in der Schaltanlage verbauten Komponenten wiedergegeben sind, sondern darüber hinaus auch deren Datenblattinformationen mit in die Dokumentation implementiert sind. Darüber hinaus können hiermit verknüpfte Funktionsinformationen Angaben darüber liefern, welche Funktion eine bestimmte elektrische Komponente der Schaltanlage in ihrer jeweiligen Einbausituation in der konkreten elektrischen Schaltanlage aufweist, beispielsweise die Ansteuerung eines Frequenzrichters für einen Drehstrommotor einer Pumpe oder dergleichen.

Sämtliche die Schaltanlage betreffenden Informationen können über den gesamten Produktlebenszyklus der Schaltanlage und des Schaltschranks, in welcher die Schaltanlage aufgenommen ist, mitgeführt und dynamisch aktualisiert werden.

Das Verfahren kann weiterhin das Einlesen der Schaltschrankkennzeichnung und das Bereitstellen einer CAD-Konstruktion einer in dem Schaltschrank auszubildenden elektrischen Schaltanlage aufweisen, wobei die CAD-Konstruktion über die Schaltschrankkennzeichnung dem Schaltschrank zugeordnet ist. Das Verfahren kann weiterhin das Einlesen der CAD-Konstruktion in eine computergestützte Assistenzeinheit aufweisen. Die computergestützte Assistenzeinheit kann dazu eingerichtet sein, die CAD-Konstruktion zu zerlegen. Dabei kann die CAD-Konstruktion in einzelne, aufeinander aufbauende Montageschritte zerlegt werden, um eine effiziente Montageschrittabfolge der elektrischen Schaltanlage, beispielsweise auf einer Montageplatte des Schaltschranks, zu ermitteln.

Die Montageschrittabfolge kann mindestens zwei aufeinanderfolgende Verdrahtungsschritte jeweils zweier Komponenten der elektrischen Schaltanlage oder mindestens zwei aufeinander folgende Komponentenpositionierungsschritte jeweils zweier Komponenten der elektrischen Schaltanlage aufweisen.

Die computergestützte Assistenzeinheit kann dazu eingerichtet sein, die CAD-Konstruktion, die mindestens ein dreidimensionales Layout und eine Stückliste der einzelnen elektrischen Komponenten der elektrischen Schaltanlage aufweist, in einzelne aufeinander aufbauende Montageschritte zu zerlegen.

Die computergestützte Assistenzeinheit kann zur Schrittfolgesteuerung eine Toleranzauswertungseinrichtung aufweisen, mit Hilfe welcher sensorisch erfasste Ist-Einbaupositionen montierter Komponenten der Schaltanlage mit Sollvorgaben entsprechend dem Schaltplan unter Berücksichtigung von vorgegebenen Einbautoleranzen verglichen werden. Die sensorische Erfassung der Ist-Einbaupositionen kann optisch und mit Hilfe von Bildverarbeitung erfolgen. Für die einfachere Erkennbarkeit der Komponenten durch die computergestützte Assistenzeinheit können die Komponenten der elektrischen Schaltanlage jeweils eine Komponentenkennung aufweisen, so dass jede der mit der Komponentenkennzeichnung gekennzeichneten Komponente eindeutig gegenüber den übrigen Komponenten zu unterscheiden ist.

Das Verfahren kann weiterhin das Visualisieren eines manuell ausführbaren Montageschritts der Montageschrittabfolge durch eine an einem Montageort installierte Anzeigeeinheit aufweisen, die Bild- und/oder Textinformationen als Montageanweisung ausgibt. Das Verfahren kann weiterhin das Durchführen des manuell ausführbaren Montageschritts nach Maßgabe der angezeigten Bild- und/oder Textinformation aufweisen. Das Verfahren kann weiterhin das Quittieren des erledigten Montageschritts über eine an dem Montageort installierte Eingabeeinheit und das Protokollieren der Erledigung des Montageschritts sowie das Abrufen eines nächsten Montageschritts der Montageschritt-Abfolge aufweisen. Dabei kann spätestens nach Durchführung aller Montageschritte der Montageschritt-Abfolge ein der Schaltschrankkennzeichnung zugeordneter Protokolldatensatz erzeugt und für den Fernzugriff hinterlegt werden, der eine Protokollierung der erledigten Montageschritte der Montageschrittabfolge aufweist.

Das Verfahren kann weiterhin das Konfigurieren einer elektrischen Schaltanlage für den Schaltschrank aufweisen, die zumindest aus mehreren elektrischen und/oder elektronischen Komponenten zusammengesetzt ist. Das Konfigurieren kann das Erstellen eines elektrischen Schaltplans der elektrischen Schaltanlage, oder, falls dieser bereits vorhanden ist, das Bereitstellen des elektrischen Schaltplans aufweisen.

Weiterhin kann das Verfahren das Umwandeln des elektrischen Schaltplans in ein dreidimensionales Montagelayout des Schaltschrankinnenraums aufweisen, insbesondere in ein dreidimensionales Montageplattenlayout, das eine Anordnung der elektrischen und/oder elektronischen Komponenten auf einer Montageplatte des Schaltschranks repräsentiert

Weiterhin kann das Verfahren das Modifizieren des drei-dimensionalen Layouts zur Erzeugung mindestens eines alternativen drei-dimensionalen Layouts aufweisen, wobei eine Gütefunktion angewendet wird, die ein Extremum annimmt, wenn die elektrische Schaltanlage hinsichtlich eines physikalischen Parameters optimiert ist, vorzugsweise hinsichtlich einer Packungsdichte der elektrischen und/oder elektronischen Komponenten der Schaltanlage, einer thermischen Last der Schaltanlage, eines elektrischen Energieverbrauchs der Schaltanlage, mindestens einer Kabellänge für die Verdrahtung der elektrischen und/oder elektronischen Komponenten der Schaltanlage.

Das Verfahren kann weiterhin das Erzeugen eines das alternative dreidimensionale Layout repräsentierenden dritten Datensatzes aufweisen sowie das Zuordnen der Schaltschrankkennzeichnung dem dritten Datensatz und das Hinterlegen des dritten Datensatzes für den Fernzugriff.

Für die Modifizierung des erstellten dreidimensionalen Layouts in das alternative dreidimensionale Layout kann ein Abwandlungsalgorithmus angewendet werden, welcher die Gütefunktion anwendet. Die Gütefunktion repräsentiert das Ziel, welches mit der Abwandlung erreicht werden soll, beispielsweise die Erhöhung des Raumnutzungsgrades der elektrischen Schaltanlage. Falls mehrere Ziele gleichzeitig erreicht werden sollen, können im Falle von Zielkonflikten Kompromisse im Sinne eines kleinsten gemeinsamen Nenners aufgefunden werden. Anstelle der Gütefunktion können auch Randbedingungen vorgegeben werden, die exakt einzuhalten sind, beispielsweise eine Maximaltemperatur oder ein maximaler Energieverbrauch der elektrischen Schaltanlage.

Bei dem Demontieren und Entfernen des mindestens einen Bauteils von zumindest einem Schaltschrank können mindestens zwei als Gleichteile ausgebildete Bauteile demontiert und entfernt werden, die sich nach dem Bearbeiten in mindestens einem Merkmal unterscheiden.

Die Bauteilkennzeichnungen der mindestens zwei als Gleichteile ausgebildeten Bauteile können weiterhin jeweils einem eindeutigen und sich voneinander unterscheidenden Ortsmerkmal zugewiesen sein, das eine Montageposition des betreffenden Bauteils an dem Schaltschrank umfasst, wobei das Wiederzuordnen der bearbeiteten Bauteile weiterhin eine Zuordnung der bearbeiteten Bauteile ihrer jeweiligen Montageposition an dem Schaltschrank aufweist.

Bei dem Demontieren und Entfernen des Bauteils von dem jeweils zugehörigen Korpus können mindestens zwei identische oder fast identische Bauteile unterschiedlicher Schaltschränke demontiert und entfernt werden.

Bei dem Bearbeiten der identischen oder fast identischen Bauteile können die Bauteile unterschiedlich bearbeitet werden, so dass sich die Bauteile nach der Bearbeitung in zumindest einem Merkmal unterscheiden.

Das Auslesen mindestens einer der Kennzeichnungen kann das Auslesen einer optisch auslesbaren Kennzeichnung, insbesondere eines Barcodes oder eines mehrdimensionalen Codes, etwa eines QR-Codes, und/oder das Auslesen einer elektromagnetisch, induktiv oder kapazitiv auslesbaren Kennzeichnung, insbesondere eines RFID-Transponders, aufweisen

Das Bereitstellen des mindestens einen Schaltschranks kann das Herstellen des Schaltschranks umfassen, wobei mindestens eines der Bauteile ein Blechformteil ist, das aus einem Stahlblechzuschnitt durch formgebende und gegebenenfalls spanende und/oder weitere blechbearbeitende Maßnahmen und gegebenenfalls eine anschließende Lackierung gebildet wird. Das Blechformteil kann vor einem Lackieren mit der maschinenlesbaren Kennzeichnung versehen werden, die bei dem Lackieren des Blechformteils mit überlackiert wird, so dass die Oberfläche des Blechformteils und die Bauteilkennzeichnung mit einer ununterbrochenen Lackschickt bedeckt sind.

Das Bereitstellen des mindestens einen Schaltschranks kann das Herstellen des Schaltschranks umfassen, wobei mindestens eines der Bauteile ein Blechformteil ist, das aus einem Stahlblechzuschnitt durch formgebende und gegebenenfalls spanende Maßnahmen gebildet wird, wobei die maschinenlesbare Kennung auf das Blechformteil mit einer im optischen Wellenlängenbereich sichtbaren oder unsichtbaren Farbe aufgedruckt wird.

Das Bereitstellen des mindestens einen Schaltschranks kann das Herstellen des Schaltschranks umfassen, wobei mindestens eines der Bauteile ein Blechformteil ist, das aus einem Stahlblechzuschnitt durch formgebende und gegebenenfalls spanende Maßnahmen und gegebenenfalls eine anschließende Lackierung gebildet wird, wobei auf dem Blechformteil oder gegebenenfalls auf der Lackierung ein Phasenwechselmaterial oder eine Matrix aus Einzelfeldern eines Phasenwechselmaterials aufgebracht und gegebenenfalls mit der Lackierung des Blechformteils überlackiert wird, wobei das Phasenwechselmaterial oder die Matrix durch thermische und/oder elektrische Beaufschlagung zur Ausbildung der Kennung mit dem mindestens einen Merkmal beschrieben wird.

Weiterhin kann eine Zubehörkomponente an oder in dem mindestens einen Schaltschrank montiert werden, die eine eindeutige Zubehörkennzeichnung aufweist, die der Schaltschrankkennzeichnung zugeordnet ist, wobei die Zubehörkennzeichnung vor, nach oder während der Montage der Zubehörkomponente an oder in dem Schaltschrank der Schaltschrankkennzeichnung zugeordnet wird. Der Zubehörkennzeichnung kann ein Datensatz zugeordnet sein, der Einbauinformation der Zubehörkomponente aufweist, beispielsweise einen Einbauort der Zubehörkennzeichnung in dem Schaltschrank.

Das Verfahren kann das Bereitstellen von mindestens zwei identischen in oder an dem Schaltschrank zu montierenden Komponenten mit jeweils einer Komponentenkennzeichnung aufweisen, wobei den Komponentenkennzeichnungen der identischen Komponenten ein individuelles Ortsmerkmal für die Unterscheidung untereinander zugeordnet wird, wenn die jeweilige Komponente in oder an dem Schaltschrank montiert wird.

Das Verfahren kann das Erzeugen eines vierten Datensatzes aufweisen, der über die Schaltschrankkennzeichnung dem Schaltschrank zugeordnet ist, wobei der Datensatz Informationen betreffend die Verwendung des Schaltschranks, die Wartung der in dem Schaltschrank aufgenommenen Schaltanlage und/oder die bestimmungsgemäße Entsorgung des Schaltschranks aufweist, die während der Herstellung aus den in der Datenbank vorgehaltenen Planungsdaten entnommen und in den Kennungen hinterlegt werden, und/oder die bedarfsweise über den Lebenszyklus des Schaltschrankes den Kennungen hinzugefügt oder in diesen aktualisiert werden.

Das Bereitstellen kann das Bereitstellen eines Schaltschranks mit einem Rahmengestell und mindestens einem Flachteil aufweisen, wobei das Rahmengestell und/oder das Flachteil einen elektrischen Kontakt aufweist. Der elektrische Kontakt kann eine Schutzabdeckung mit einem nicht flüchtigen Speicher aufweisen, in dem zumindest ein das den elektrischen Kontakt aufweisende Rahmengestell oder Flachteil betreffender Datensatz, vorzugsweise eine das den elektrischen Kontakt aufweisende Rahmengestell oder Flachteil eindeutig kennzeichnende Bauteilkennzeichnung, hinterlegt ist. Die Schutzabdeckung kann ein mit dem elektrischen Kontakt fest verbundenes Teil und ein von dem elektrischen Kontakt lösbares Teil aufweisen, wobei das fest verbundene Teil den nicht flüchtigen Speicher aufweist. Das mit dem elektrischen Kontakt fest verbundene Teil kann mit dem von dem elektrischen Kontakt lösbaren Teil über eine Sollbruchstelle verbunden sein.

Weitere Einzelheiten der Erfindung werden anhand der nachstehenden Figuren erläutert. Dabei zeigt:
- Figur 1: schematisch die Herstellung eines Schaltschranks bei einem Schaltschrankhersteller;
- Figur 2: schematisch die Bearbeitung eines abnehmbaren an einem Schaltschrank montierten Bauteils bei einem Schaltanlagenbauer;
- Figur 3: den Wartungsfall einer elektrischen Schaltanlage beim Endnutzer;
- Figur 4: eine Ausführungsform einer Bauteilkennzeichnung; und
- Figur 5: die Montage und Verwendung der Ausführungsform gemäß Figur 4.

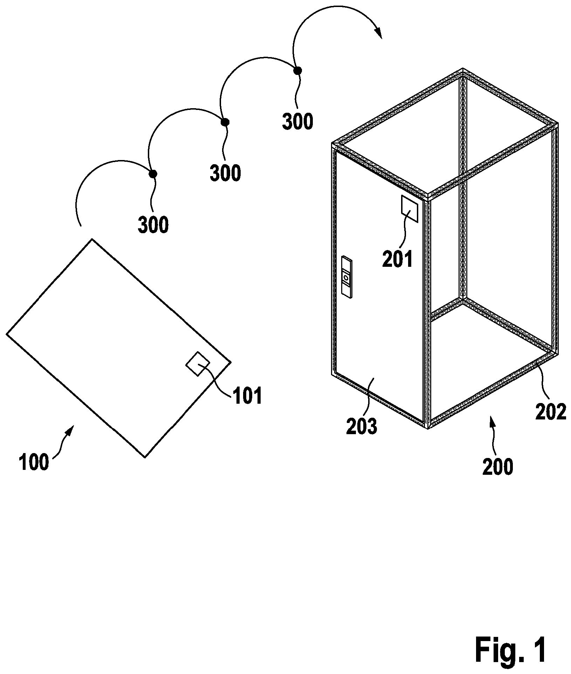

Die Figuren 1 bis 3 zeigen eine beispielhafte Ausführungsform eines erfindungsgemäßen Verfahrens für die Bearbeitung mindestens eines Schaltschranks 200. Dabei zeigt die Figur 1 die Herstellung des Schaltschanks beim Schaltschrankbauer. Dies umfasst die Rohfertigung eines Flachteils 100, beispielsweise einer Schaltschrankseitenwand, einer Schaltschranktür, oder einer Montageplatte. Das Flachteil 100 weist eine Bauteilkennzeichnung 101 auf, über welche das Flachteil 100 eindeutig identifizierbar ist.

Es ist möglich, dass die Bauteilkennzeichnung 101 bereits frühestmöglich an dem Flachteil 100 angeordnet wird und somit bereits bei der Rohfertigung des Flachteils 100 dem Schaltschrankhersteller die Möglichkeit gibt, die das Flachteil individuell betreffende Herstellungsinformation über einen mit der Baukennzeichnung 101 verknüpften Datensatz zu hinterlegen. So ist es beispielsweise möglich, dass über die Bauteilkennzeichnung 101 ein Datensatz eindeutig zugewiesen ist, welcher Bearbeitungsinformation während des Herstellungsprozesses des Flachteils 100, beispielsweise einer Montageplatte beinhaltet. Dies kann beispielsweise die Einbringung von Ausbrüchen in der Montageplatte bereits bei der Rohfertigung der Montageplatte umfassen. Wenn das Flachteil 100 eine Seitenwand für ein Schaltschrankgehäuse 200 werden soll, so ist es möglich, das bereits nach der Herstellung des gekanteten Blechrohlings die Bauteilkennzeichnung 101 auf den gekanteten Blechrohling aufgebracht wird, wobei der über die Bauteilkennzeichnung 101 verknüpfte Datensatz Informationen betreffend die weitere Veredelung des Blechrohlings aufweisen kann. Dies kann beispielsweise die Aufbringung einer Lackierung, einer geschäumten Dichtung, oder die Einbringung von Befestigungsdurchbrüchen für die Montage des Flachteils am Schaltschrank umfassen. Diese Bearbeitungsschritte sind in Figur 1 mit dem Bezugszeichen 300 gekennzeichnet und sind grundsätzlich auf keine bestimmten Bearbeitungsschritte beschränkt.

Je nach Art des Umfangs der Bearbeitungsschritte 300, mit denen der Flachteilrohling 100 veredelt werden soll, ist es erforderlich, die Bauteilkennzeichnung 101 entsprechend geeignet auszubilden. Wenn beispielsweise die Bauteilkennzeichnung 101 bereits vor einer Tauchlackierung des Flachteils 100 aufgebracht werden soll, so ist es erforderlich, dass die Bauteilkennzeichnung 101 überlackierbar ist beziehungsweise auch in einem überlackierten Zustand noch auslesbar ist. Bei einer Ausführungsform der Erfindung kann jedoch vorgesehen sein, dass die Bauteilkennzeichnung 101 in Form eines gedruckten QR-Codes bereitgestellt ist, welcher erst nach der Tauchlackierung des Flachteils aufgebracht werden kann. Bei dieser Ausführungsform der Bauteilkennzeichnung 101 ist dann die Lackierung keiner der Bearbeitungsschritte, welcher nach der Anbringung der Bauteilkennzeichnung 101 erfolgen kann und ist dementsprechend auch kein Bearbeitungsschritt 300, welcher in dem mit der Bauteilkennzeichnung 101 verknüpften Datensatz hinterlegt ist.

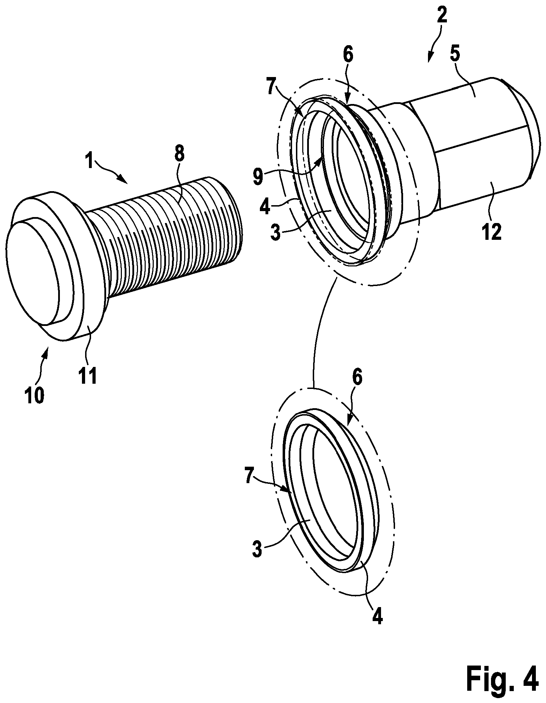

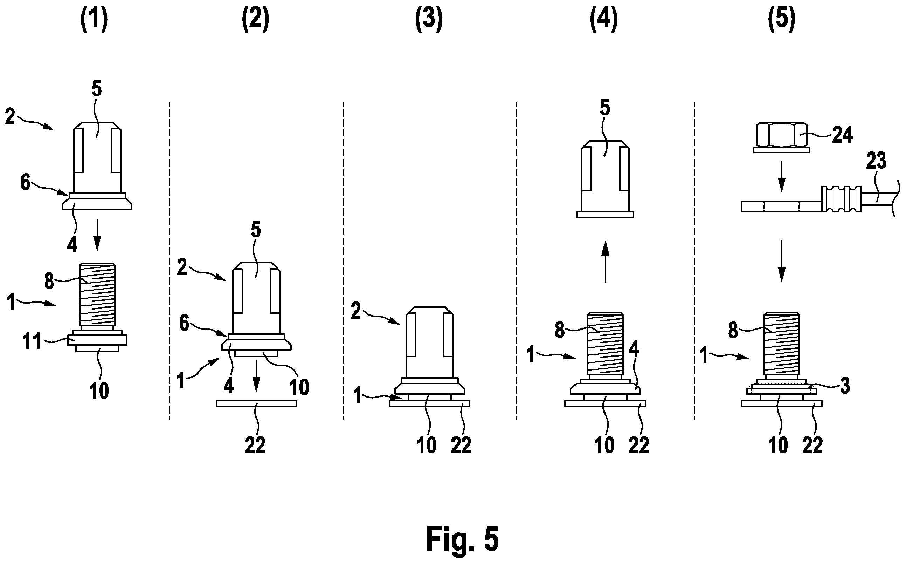

Mit Bezug auf die Figuren 4 und 5 wird eine Ausführungsform einer Bauteilkennzeichnung vorgestellt, welche auch bereits vor einer Lackierung des Flachteils aufgebracht werden kann, mithin auch im überlackierten Zustand noch voll funktionsfähig ist.

Nachdem das Flachteil 100 mit der Bauteilkennzeichnung 101 die Bearbeitungsschritte 300 durchlaufen hat, kann es einem bestimmten Schaltschrank 200 über eine Schaltschrankkennzeichnung 201 am Schaltschrank 200 zugeordnet werden. Wenn es sich bei dem Bauteil 100 um ein Standardserienbauteil handelt, kann die Zuordnung nach Fertigstellung des Flachteils 100, das heißt nachdem das Flachteil 100 sämtliche Bearbeitungsschritte 300 durchlaufen hat, erfolgen. Wenn das Bauteil 100 ein Bauteil ist, welches eine individuelle Bearbeitung erfahren hat, kann es zweckmäßig sein, das Bauteil 100 über seine Bauteilkennzeichnung 101 bereits während seiner Entstehung, insbesondere vor seiner Individualisierung, einem bestimmten Schaltschrank 200 beziehungsweise einer bestimmten Schaltschrankkennzeichnung 201 zuzuordnen, so dass bereits bei der Entstehung des Flachteils 100 eine eindeutige Zuordnung zwischen dem Flachteil 100 und dem späteren Schaltschrank 200 hergestellt ist.

So ist es beispielsweise möglich, dass der Schaltschrankkennzeichnung 201 ein Datensatz zugeordnet ist, welcher Projektdaten des fertigen Schaltschranks mit darin aufgenommener Schaltanlage aufweist, beispielsweise MCAD-Daten, welche, unter anderem, die Nachbearbeitung zumindest eines abnehmbar montierten Bauteils 100 betreffen. Dann ist es zweckmäßig, dass bereits bei der Herstellung des Bauteils 100 die das Bauteil 100 betreffenden MCAD-Daten über die Bauteilkennzeichnung 101 mit einem bestimmten Bauteil 100 verknüpft sind.

Die Schaltschrankkennzeichnung 201 selbst kann auf einem abnehmbar montierten Bauteil des Schaltschranks 200 angeordnet sein, beispielsweise auf einer Tür 203. Dabei kann das betreffende Bauteil 203, hier eine Tür, neben der Schaltschrankkennzeichnung 201 weiterhin eine Bauteilkennzeichnung aufweisen.

Die Schaltschrankkennzeichnung 201 macht aus dem die Schaltschrankkennzeichnung 201 aufweisenden Bauteil, hier der Tür 203, ein Master-Bauteil, dem über die Zuordnung der Schaltschrankkennzeichnung 201 mindestens einer Bauteilkennzeichnung 101 eines Bauteils 100 zumindest sämtliche abnehmbaren Bauteile des Schaltschranks 200 mit einer Bauteilkennzeichnung 101 zugeordnet sind. Dabei können sämtliche abnehmbar montierten Bauteile, insbesondere sämtliche Flachteile, eine Bauteilkennzeichnung 101 aufweisen, unabhängig davon, ob das betreffende abnehmbar montierte Bauteil 100 eine individuelle Nachbearbeitung erfährt, oder ob es sich auch nach der Fertigstellung des Schaltschranks mit aufgenommener Schaltanlage noch um ein Standardserienprodukt handelt.

Das Rahmengestell 202 des Schaltschranks 200 wird üblicherweise keiner Nachbearbeitung unterzogen und ist zumindest hinsichtlich seiner Geometrie ein standardisiertes Bauteil, vorbehaltlich der Tatsache, dass Schaltschränke mit unterschiedlichen Außenabmessungen und dementsprechend mit unterschiedlich großen Schaltschrankrahmengestellen existieren.

Grundsätzlich kann auch das Rahmengestell 202 eine Bauteilkennzeichnung 101 aufweisen, die der Schaltschrankkennzeichnung 201 zugeordnet ist, was zum Beispiel bei Kommissionsarbeiten gewünscht sein kann, um eine eindeutige Rückverfolgung auch des Rahmengestells 202 zu ermöglichen. Es ist beispielsweise auch denkbar, dass die Schaltschrankkennzeichnung 201 an dem Rahmengestell 202 ausgebildet ist. Nach der Fertigstellung des Schaltschranks 200 kann über die Schaltschrankkennzeichnung 201 ein Datensatz hinterlegt sein, welcher die Produktspezifikation des fertigen Schaltschranks 200 wiedergibt, gegebenenfalls einschließlich einer herstellerseitig vorgenommenen individuelle Bearbeitung des Schranks.

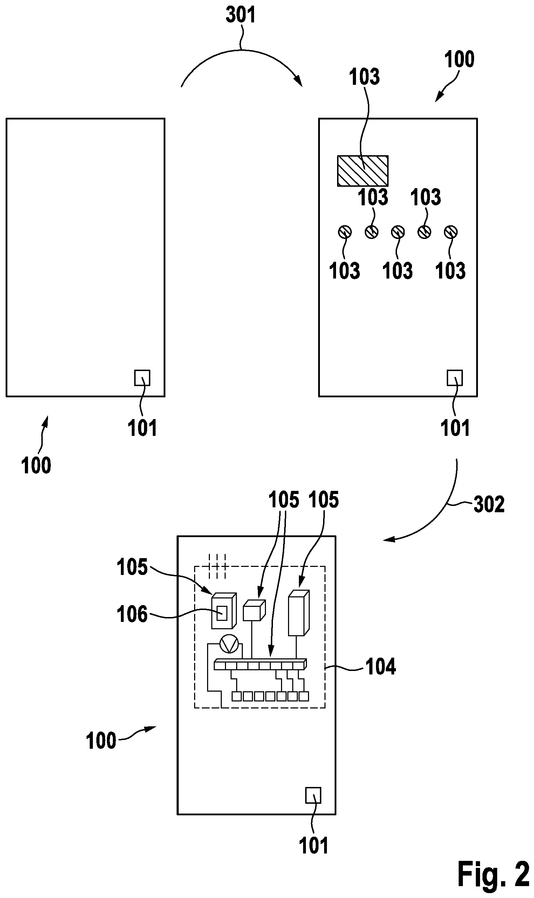

Die Figur 2 veranschaulicht die Situation beim Schaltanlagenbauer, der vom Schaltschrankhersteller das mit Bezug auf Figur 1 beschriebene Schaltschrankgehäuse 200 in Empfang nimmt. Wie bereits mit Bezug auf Figur 1 beschrieben worden ist, kann das vom Schaltschrankhersteller dem Schaltanlagenbauer gelieferte Schaltschrankgehäuse ein Serienprodukt sein, oder ein Schaltschrankgehäuse 200, welches entsprechend Projektdaten, welche dem Schaltschrankhersteller vom Schaltanlagenbauer zugeliefert worden sind, bereits einen gewissen Individualisierungsgrad aufweist, beispielsweise Ausbrüche in Seitenwänden für die Montage eines Klimageräts oder dergleichen.

Der Schaltanlagenbauer wird somit zumindest die Montageplatte 100 aus dem Schaltschrankgehäuse 1 entfernen, um darauf die Schaltanlage 104 auszubilden. Dementsprechend stellt in Figur 2 das abnehmbar montierte Bauteil 100 mit der Bauteilkennzeichnung 101 eine Montageplatte dar. Ein Bearbeitungsschritt der Montageplatte 100, nachdem diese von dem Schaltanlagenbauer aus dem Schaltschrankgehäuse 200 demontiert und entfernt worden ist, stellt das Ausbilden von Durchbrüchen 103 in der Montageplatte 100 dar, die für die Ausbildung der Schaltanlage auf der Montageplatte 100 erforderlich sind, beispielsweise für die Kabelführung oder für die Luftführung von Kühlluft. Wie bereits mit Bezug auf Figur 1 beschrieben ist, können die Durchbrüche 103 jedoch grundsätzlich auch bereits beim Schaltschrankhersteller ausgebildet werden, was gerade durch die erfindungsgemäße Datendurchgängigkeit zwischen Gewerken erreicht wird, die gerade durch die eindeutige Bauteil- und Schaltschrankkennzeichnung der erfindungsgemäßen Art ermöglicht wird.

Ein weiterer Bearbeitungsschritt 302 umfasst das Bestücken der Montageplatte 100 mit elektrischen und/oder elektronischen Komponenten 105 sowie die Verdrahtung der Komponenten untereinander. Entsprechende Stücklisten, ein Schaltplan, ein Verdrahtungsplan und weitere Montagehilfsinformationen können wiederum über die Bauteilkennzeichnung 101 zugeordnet sein. Der Schaltanlagenbauer kann beispielsweise durch Einlesen der Kennzeichnung 101 und Abrufen eines mit der Bauteilkennzeichnung 101 verknüpften Datensatzes, etwa mit Hilfe "Augmented Reality", bei der Bestückung der Montageplatte und der Verdrahtung der Komponenten unterstützt werden. Für die bessere maschinelle Erkennbarkeit der Komponenten 105 auf der Montageplatte 100 können die Komponenten 105 eine maschinenlesbare Komponentenkennzeichnung 106 aufweisen. So ist es beispielsweise möglich, dass durch Einlesen der Bauteilkennzeichnung 101 ein Datensatz an eine Mensch-Maschine-Schnittstelle übertragen wird, welche einen mit der Bauteilkennzeichnung 101 verknüpften Schaltplan anzeigt, wobei das Einlesen der Komponentenkennzeichnung 106 dazu dient, einem Monteur die korrekte Anordnung und Verdrahtung der betreffenden Komponente 106 auf der Montageplatte zu veranschaulichen.

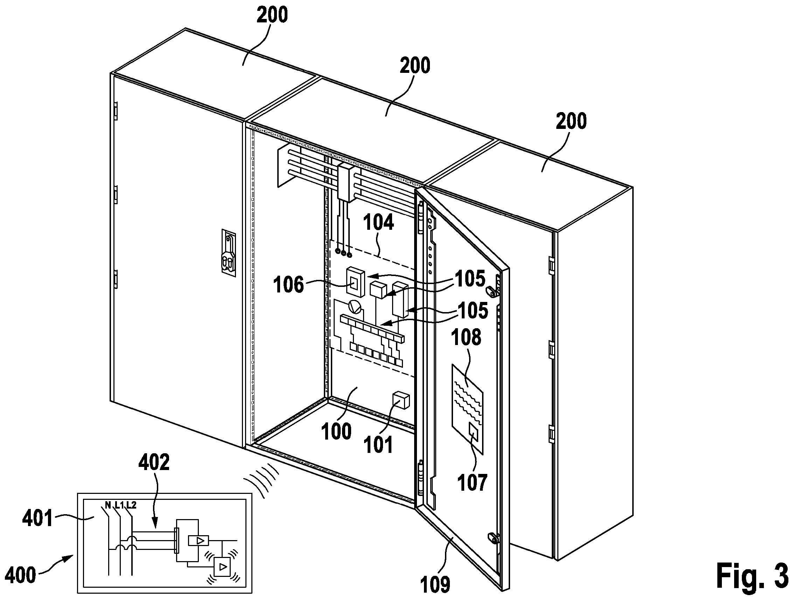

Die Figur 3 zeigt die Situation beim Endanwender der elektrischen Schaltanlage. Dort kann das die Schaltanlage 104 aufweisende Schaltschrankgehäuse 200 in eine Schaltschrankreihe aus mehreren Schaltschränken 200 eingereiht sein. Die bei dem Schaltanlagenbauer gemäß Figur 2 erstellte Schaltanlage 104 auf der Montageplatte 100 ist bei der Darstellung gemäß Figur 3 in dem mittleren Schaltschrankgehäuse 200 aufgenommen. Dem Endanwender der elektrischen Schaltanlage 104 kommt es insbesondere darauf an, den Betrieb der Schaltanlage und die Wartung der Schaltanlage mit möglichst einfachen technischen Mitteln sicherzustellen. Auch hierbei kann ihm die erfindungsgemäße Bauteilkennzeichnung zur Hilfe kommen.

Beispielsweise kann der Endanwender der elektrischen Schaltanlage im Betrieb der elektrischen Schaltanlage die Bauteilkennzeichnung 101 einlesen, über welche Betriebsparameter der elektrischen Schaltanlage 104 in einem der Bauteilkennzeichnung 101 zugeordneten Datensatz hinterlegt sind. Dies kann beispielsweise das Abrufen von Störmeldungen oder die Überwachung des Betriebsablaufs der Schaltanlage umfassen, beispielsweise die Ausgabe mindestens eines Energieverbrauchswerts.

Wenn die elektrische Schaltanlage 104 eine Überwachungseinrichtung aufweist, welche den Betrieb der elektrischen Schaltanlage 104 überwacht und entsprechende Betriebsparameter in dem Datensatz hinterlegt sind, welche über die Bauteilkennzeichnung 101 abrufbar sind, so kann der Anwender der elektrischen Schaltanlage über eine Mensch-Maschine-Schnittstelle 400 durch Einlesen der Kennzeichnung 101, beispielsweise mit Hilfe eines optischen Kameramoduls der Mensch-Maschine-Schnittstelle 400, die von der Überwachungseinheit erfassten Betriebsparameter abrufen. Der entsprechende Datensatz kann in einer Cloud hinterlegt sein, auf welche der Mensch-Maschine-Schnittstelle zugreift. In der Darstellung gemäß Figur 3 wird auf einem Display 401 der Mensch-Maschine-Schnittstelle 400 ein Schaltplan 402 der elektrischen Schaltanlage 104 angezeigt. Der Datensatz der Schaltanlageüberwachungseinrichtung kann mit dem Schaltplan überlagert werden, so dass beispielsweise betriebsrelevante Parameter der einzelnen Komponenten der elektrischen Schaltanlage 104 in dem Schaltplan 402 auf dem Display 401 entsprechenden Komponentensymbolen zugeordnet angezeigt werden können, wodurch die Wartung der elektrischen Schaltanlage 104 erheblich erleichtert wird.

An der Innenseite der Schaltschranktür 109 kann eine Schaltplantasche 108 mit einer weiteren Kennzeichnung 107 angeordnet sein, wobei über die Kennzeichnung 107 analog zu der Bauteilkennzeichnung 101 ein Datensatz hinterlegt werden kann, welcher wesentliche Betriebsparameter der elektrischen Schaltanlage 104 aufweist. Der Datensatz kann weiterhin einen Schaltplan, eine Komponentenstückliste, physikalische Betriebsparameter der einzelnen Komponenten, eine Wartungshistorie der elektrischen Schaltanlage und weitergehende Informationen, die üblicherweise in einer klassischen papiernen Schaltplanmappe vorgehalten sind, sowie darüber hinaus gehende Informationen, etwa Inbetriebnahmeinformationen der elektrischen Schaltanlage aufweisen.

Die Figur 4 zeigt eine beispielhafte Ausführungsform einer überlackierbaren Bauteilkennzeichnung, die als ein elektrischer Kontakt ausgebildet ist. Dieser weist einen Aufschweißbolzen 1 mit einem Außengewinde 8 und einem Sockel 10 auf. Über den Sockel 10 kann der Aufschweißbolzen 1 beispielsweise mit einem Flachteil 100, wie es in Figur 1 gezeigt ist, verschweißt und damit auch elektrisch verbunden werden. Das Verschweißen kann vor dem Lackieren des Schaltschrankgehäuses bzw. des Flachteils erfolgen. Der Sockel 10 weist an seinem Außenumfang eine hinterschnittige Kontur 11 auf, welche dazu verwendet werden kann, eine Fügeverbindung zwischen dem Aufschweißbolzen 1 und der ebenfalls dargestellten Schutzabdeckung 2 auszubilden.

Die Schutzabdeckung 2 kann beispielsweise nach Art einer Kunststoffkappe ausgebildet sein. Abweichend von aus dem Stand der Technik bekannten Lackschutzkappen weist die dargestellte Schutzabdeckung 2 neben einem mit dem elektrischen Kontakt 1 fest verbindbaren Teil 4 am unteren Rand der Schutzabdeckung 2 weiterhin ein von dem elektrischen Kontakt 1 lösbares Teil 5 auf. Die aus dem Stand der Technik bekannten Lackschutzkappen sind einteilig. Das von dem elektrischen Kontakt 1 lösbare Teil 5 kann beispielsweise ein mit dem Außengewinde 8 korrespondierendes Innengewinde aufweisen, über welches das Teil 5 auf den Kontakt 1 aufgeschraubt werden kann. Das von dem elektrischen Kontakt 1 lösbare Teil 5 kann jedoch auch nach Art einer Haube ohne Innengewinde ausgebildet sein, die nur über ihre Sollbruchstelle und das fest verbundene Teil 4 an dem Aufschweißbolzen 1 gehalten ist. Der mit dem Aufschweißbolzen 1 fest verbundene Teil 4 kann beispielsweise über den Hinterschnitt 11 am Sockel des Kontakt 1 mit dem Kontakt 1 gefügt sein.

Das fest verbundene Teil 4 weist den nicht flüchtigen Speicher 3 für die Hinterlegung einer Bauteilkennzeichnung auf. Das mit dem Aufschweißbolzen 1 fest verbundene Teil 4 ist mit dem von dem Aufschweißbolzen 1 lösbaren Teil 5 über eine Sollbruchstelle 6 verbunden. Der nicht flüchtige Speicher 3 ist ein drahtlos auslesbarer Speicher 3, beispielsweise ein RFID-Transponder. Eine Antenne 7 des drahtlos auslesbaren Speichers 3 ist entlang des Außenumfangs des elektrischen Kontakts 1 angeordnet, wenn die Schutzabdeckung 2 auf den Kontakt aufgesetzt ist, beispielsweise indem das fest verbundene Teil 4 mit dem Sockel 10 gefügt ist. Da sich die Antenne 7 am Außenumfang des Sockels 10 erstreckt, wird sie auch nicht von dem als Metallteil ausgebildeten Aufschweißbolzen 1 elektromagnetisch abgeschirmt. DieAntenne 7 kann in das fest verbundene Teil 4 eingebettet sein. Das Material des fest verbundenen Teils 4 weist dementsprechend keine erhebliche elektromagnetisch abschirmende Wirkung auf und ist beispielsweise ein Kunststoff.

Die Schutzabdeckung 2 weist ein Deckelteil 12 auf, das an seinem freien Rand 9 über eine Sollbruchstelle 6 mit dem mit dem Sockel 10 des Erdungsbolzens fest verbindbaren Teil 4 der Schutzabdeckung verbunden ist.

Da der nicht flüchtige Speicher 3 mit dem zumindest einen Datensatz, etwa einer Bauteilkennzeichnung, in dem mit dem elektrischen Kontakt fest verbindbaren Teil 4 der Schutzabdeckung 2 angeordnet ist, verbleibt der Speicher 3 am Schaltschrankgehäuse, wenn das Deckelteil 12 über die Sollbruchstelle 6 von dem festen Teil 4 abgelöst und das Deckelteil 12 entfernt wird. Dadurch bleibt die in dem Speicher 3 gespeicherte Information auch dann erhalten, wenn beispielsweise zur Herstellung eines Massekontakts für den Potentialausgleich das Deckelteil 12 der Schutzabdeckung 2 von dem Gewinde 8 des elektrischen Kontakts abgeschraubt oder ausgelöst und von dem Schaltschrankgehäuse entfernt wird.

Die Figur 5 veranschaulicht ein beispielhaftes Herstellungs- und Anwendungsverfahren des Aufschweißbolzen 1. In einem ersten Schritt kann der Aufschweißbolzen 1 hergestellt werden, indem dieser mit der Schutzabdeckung 2 bestehend aus dem festverbindbaren Teil 4 und dem lösbaren Teil 5 in einem Fügeschritt mit dem Aufschweißbolzen 1 verbunden wird.

Anschließend kann der mit der Schutzabdeckung 2 versehene Aufschweißbolzen 1 über einen Schweißvorgang mit einem Flachteil 22 eines Schaltschrankgehäuses verbunden werden. Wird daraufhin die Schutzabdeckung 2 von dem elektrischen Kontakt entfernt, wobei der Aufschweißbolzen 1 zumindest teilweise freigelegt wird und der nicht flüchtige Speicher 3 an dem elektrischen Kontakt 1 verbleibt, kann eine elektrische Verbindung zu dem Schaltschrankgehäuse beziehungsweise dem Flachteil 22 durch Kontaktieren des elektrischen Kontakts 1 mit einem Schutzleiter 23 hergestellt werden. Der Schutzleiter 23 kann eine Aderendöse aufweisen, die auf den Gewindeabschnitt 8 des Aufschweißbolzen 1 aufgesetzt und mit einer Mutter 24 arretiert wird. Zur verbesserten Darstellung ist in Figur 5 die am weitesten rechte Teildarstellung ohne das äußere Gehäuse des fest verbundenen Teils 4 abgebildet, so dass der auch nach dem Entfernen des lösbaren Teils 5 weiter an dem elektrischen Kontakt 1 verbleibende nicht flüchtige Speicher 3 in dem festen Teil 4 sichtbar ist, auch wenn dieser im konkreten Anwendungsfall innerhalb eines Kunststoffgehäuses des fest verbundenen Teils 4, wie es in der zweiten Darstellung von rechts gezeigt ist, schützend aufgenommen ist.

### Bezugszeichenliste

- 1: Aufschweißbolzen
- 2: Schutzabdeckung
- 3: nicht flüchtiger Speicher
- 4: fest verbundenes Teil
- 5: lösbares Teil
- 6: Sollbruchstelle
- 7: Antenne
- 8: Außengewinde
- 9: Rand
- 10: Sockel
- 11: hinterschnittige Kontur
- 12: Deckelteil
- 20: Schaltschrankgehäuse
- 21: Rahmengestell
- 22: Flachteil
- 23: Schutzleiter
- 24: Mutter
- 100: abnehmbar montiertes Bauteil
- 101: Bauteilkennzeichnung
- 103: Durchbruch
- 104: Schaltanlage
- 105: elektrische und/oder elektronische Komponente
- 106: Komponentenkennzeichnung
- 107: Schaltplankennzeichnung
- 108: Schaltplanhalter
- 109: Schaltschranktür
- 200: Schaltschrank
- 201: Schaltschrankkennzeichnung
- 202: Rahmengestell
- 203: Schaltschranktür
- 300: Bearbeitungsschritt
- 301: Einbringen von Durchbrüchen
- 302: Aufbau der elektrischen Schaltanlage
- 400: Mensch-Maschine-Schnittstelle
- 401: Display
- 402: digitaler Schaltplan

## Patentansprüche

1. Verfahren für die Bearbeitung mindestens eines Schaltschranks (200), das die Schritte aufweist:
- Bereitstellen mindestens eines Schaltschranks (200), der mehrteilig aufgebaut ist und mindestens ein abnehmbar montiertes Bauteil (100) aufweist;
- Demontieren und Entfernen des abnehmbar montierten Bauteils (100) von dem Schaltschrank (200);
- Bearbeiten des demontierten und entfernten Bauteils (100) und Bereitstellen des bearbeiteten Bauteils (100) für die Wiedermontage an dem zugehörigen Schaltschrank (200); und
- Wiederzuordnen des für die Wiedermontage bereitgestellten bearbeiteten Bauteils (100) dem zugehörigen Schaltschrank (200), wobei der mindestens eine Schaltschrank (200) eine individuelle maschinenlesbare Schaltschrankkennzeichnung (201) und das mindestens eine abnehmbar montierte Bauteil (100) eine individuelle maschinenlesbare Bauteilkennzeichnung (101) aufweist, die einander zugeordnet sind, wobei das Wiederzuordnen des Bauteils (100) zu dem Schaltschrank (200) das maschinelle Auslesen der maschinenlesbaren Kennzeichnungen (201) und das Zusammenführen des Bauteils (100) und des Schaltschranks (200), welche die einander zugeordneten Kennzeichnungen (101, 201) aufweisen, aufweist,
und wobei das Bereitstellen oder das Demontieren und Entfernen des abnehmbar montierten Bauteils (100) das Erzeugen eines ersten Datensatzes aufweist, der einen Ziel-Bearbeitungszustand des Bauteils (100) beschreibt, wobei der erste Datensatz über die Bauteilkennzeichnung (101) dem Bauteil (100) zugeordnet ist, und das Hinterlegen des ersten Datensatzes für den Fernzugriff,
**dadurch gekennzeichnet, dass**
der erste Datensatz mechanische Konstruktionsinformationen eines Lochbilds (103) für eine in dem Schaltschrank zu erstellende Schaltanlage (104) oder für die Montage eines Schaltschrankklimageräts aufweist, wobei das Herstellen des abnehmbar montierten Bauteils (100) das mechanische Bearbeiten des abnehmbar montierten Bauteils (100) zur Herstellung des Lochbilds (103) aufweist.

2. Verfahren nach Anspruch 1, bei dem das Bereitstellen des mindestens einen Schaltschranks (200) das Herstellen des Schaltschranks (200) aufweist, wobei bei der Herstellung des Schaltschranks (200) das abnehmbar montierte Bauteil (100) des Schaltschranks (200) mit der Bauteilkennzeichnung (101) und das mindestens eine weitere Bauteil (203) des Schaltschranks (200) mit der Schaltschrankkennzeichnung (201) unabhängig voneinander hergestellt und nach ihrer Herstellung durch Einlesen der Kennzeichnungen (101, 201) erstmalig einander zugeordnet werden.

3. Verfahren nach Anspruch 1, bei dem das Erzeugen des den Ziel-Bearbeitungszustand beschreibenden ersten Datensatzes das Hinterlegen mindestens eines Bearbeitungsschritts in dem ersten Datensatz aufweist, der erforderlich ist, um das Bauteil (100) aus seinem Istzustand in den Ziel-Bearbeitungszustand zu überführen.

4. Verfahren nach einem der Ansprüche 2 oder 3, bei dem das Herstellen des Schaltschranks (200) das Herstellen des abnehmbar montierten Bauteils (100) in der Serienfertigung umfasst, wobei das Verfahren weiterhin die Schritte aufweist:
- Erfassen der Bauteilkennzeichnung (101) des abnehmbar montierten Bauteils (100) in der Serienfertigung;
- Einlesen des ersten Datensatzes und Erfassen des Ziel-Bearbeitungszustands oder des mindestens eines Bearbeitungsschritts;
- Aussondern des abnehmbar montierten Bauteils (100) aus der Serienfertigung und Zuleiten des abnehmbar montierten Bauteils (100) einer Bearbeitungsstation, wobei in der Bearbeitungsstation der mindestens eine Bearbeitungsschritt und/oder ein weiterer Bearbeitungsschritt durchgeführt wird, um das abnehmbar montierte Bauteil (100) dem des Ziel-Bearbeitungszustands anzunähern; und
- nach der Durchführung des Bearbeitungsschritts Wiedereingliedern des abnehmbar montierte Bauteils (100) in die Serienfertigung.

5. Verfahren nach einem der Ansprüche 2 bis 4, bei dem das Herstellen des Schaltschranks (200) das Herstellen des abnehmbar montierten Bauteils (100) in der Serienfertigung umfasst, wobei das abnehmbar montierte Bauteil (100) mehrere Bearbeitungsstationen durchläuft, wobei an mindestens einer Bearbeitungsstation
- die Bauteilkennzeichnung (101) des abnehmbar montierten Bauteils (100) ausgelesen wird;
- der der Bauteilkennzeichnung (101) zugeordnete erste Datensatz erfasst wird;
- mindestens ein Bearbeitungsschritt durchgeführt wird, um das Bauteil (100) dem Ziel-Bearbeitungszustand anzunähern;
- ein aktualisierter Bearbeitungszustand in dem ersten Datensatz hinterlegt wird; und
- der erste Datensatz für den Fernzugriff hinterlegt wird.

6. Verfahren nach Anspruch 3, das weiterhin das Erzeugen eines zweiten Datensatzes aufweist, der über die Schaltschrankkennzeichnung (201) dem Schaltschrank (200) zugeordnet und für den Fernzugriff hinterlegt wird, wobei der zweite Datensatz einen Schaltplan einer in dem Schaltschrank zu erstellenden oder bereits erstellten Schaltanlage (104) aufweist, und wobei der zweite Datensatz durch Modifizieren, insbesondere durch Anreichern des ersten Datensatzes, aus dem ersten Datensatz erhalten werden kann.

7. Verfahren nach Anspruch 6, das das Ändern des Schaltplans entsprechend einer erfassten Änderung der Schaltanlage (104) und das Aktualisieren des zweiten Datensatzes aufweist, so dass der aktualisierte zweite Datensatz den geänderten Schaltplan aufweist.

8. Verfahren nach Anspruch 7, bei dem das Erfassen einer Änderung der Schaltanlage (104) das Erfassen von Komponentenkennzeichnungen (106) der Komponenten (105) der elektrischen Schaltanlage (104) aufweist, wobei über einen Abgleich der erfassten Komponentenkennzeichnungen (106) mit dem Schaltplan eine Veränderung einer Komponentenbestückung der elektrischen Schaltanlage (104) erfasst wird.

9. Verfahren nach Anspruch 8, das das zumindest teilweise optische oder elektromagnetische Erfassen eines Innenraums des Schaltschranks (200), insbesondere einer Montageseite einer Montageplatte, an der die elektrische Schaltanlage (104) angeordnet ist, aufweist, wobei das Erfassen das Erfassen mindestens einer Komponentenkennzeichnung (106) mindestens einer Komponente (105) der Schaltanlage (104) aufweist, wobei das Erfassen neben dem Erfassen der Komponentenkennzeichnung (106) weiterhin das Erfassen einer Ortsinformation der Komponente (105) relativ zu zumindest einer weiteren Komponente (105) der Schaltanlage (104) mit einer weiteren Komponentenkennzeichnung (106) aufweist.

10. Verfahren nach einem der vorangegangenen Ansprüche, das weiterhin aufweist:
- Erstellen einer elektrischen Schaltanlage (104) in dem Schaltschrank (200) ausgehend von einer CAD-Konstruktion der Schaltanlage (104), die über die Schaltschrankkennzeichnung (201) dem Schaltschrank (200) zugeordnet ist, wobei Datenblattinformationen von elektrischen Komponenten (105) der elektrischen Schaltanlage (104) mit Informationen über deren Verschaltung in der elektrischen Schaltanlage (104) verknüpft und in einer zentralen Archivdatenbank unter der Schaltschrankkennzeichnung (201) in mindestens einem Datensatz hinterlegt werden,
- technisches Abnehmen der Schaltanlage (104), wobei zu dem mindestens einen Datensatz Test- und Abnahmeinformationen der Schaltanlage (104) hinzugefügt werden, wobei bei Vollständigkeit der notwendigen Test- und Abnahmeinformationen eine Inbetriebnahmefreigabe für den Schaltschrank (200) ausgelöst wird, und
- in Betrieb nehmen der Schaltanlage (104), wobei dem mindestens einen Datensatz Inbetriebnahmeinformationen der Schaltanlage (104) über eine Mensch-Maschine-Schnittstelle (400) hinzugefügt werden.

11. Verfahren nach einem der vorangegangenen Ansprüche, das weiterhin aufweist:
- Einlesen der Schaltschrankkennzeichnung (201) und Bereitstellen einer CAD-Konstruktion einer in dem Schaltschrank (200) auszubildenden elektrischen Schaltanlage (104), wobei die CAD-Konstruktion über die Schaltschrankkennzeichnung (201) dem Schaltschrank (200) zugeordnet ist, und Einlesen der CAD-Konstruktion in eine computergestützte Assistenzeinheit,
- Zerlegen der CAD-Konstruktion in einzelne aufeinander aufbauende Montageschritte durch die computergestützte Assistenzeinheit für die Ermittlung einer effizienten Montageschritt-Abfolge, wobei die Montageschritt-Abfolge mindestens zwei aufeinander folgende Verdrahtungsschritte jeweils zweier Komponenten (105) der elektrischen Schaltanlage (104) oder mindestens zwei aufeinander folgende Komponentenpositionierungsschritte jeweils zweier Komponenten (105) der elektrischen Schaltanlage (104) aufweist.

12. Verfahren nach Anspruch 11, das weiterhin aufweist:
- Visualisieren eines manuell ausführbaren Montageschritts der Montageschritt-Abfolge durch eine an einem Montageort installierte Anzeigeeinheit, die Bild- und/oder Textinformationen als Montageanweisung ausgibt,
- Durchführen des manuell ausführbaren Montageschritts nach Maßgabe der angezeigten Bild- und/oder Textinformation,
- Quittieren des erledigten Montageschritts über eine an dem Montageort installierte Eingabeeinheit und Protokollieren der Erledigung des Montageschritts sowie Abrufen eines nächsten Montageschritts der Montageschritt-Abfolge,
- wobei spätestens nach Durchführung aller Montageschritte der Montageschritt-Abfolge ein der Schaltschrankkennzeichnung (201) zugeordneter Protokolldatensatz erzeugt und für den Fernzugriff hinterlegt wird, der eine Protokollierung der erledigten Montageschritte der Montageschritt-Abfolge aufweist.

13. Verfahren nach einem der vorangegangenen Ansprüche, das weiterhin das Konfigurieren einer elektrischen Schaltanlage (104) für den Schaltschrank (200) aufweist, die zumindest aus mehreren elektrischen und/oder elektronischen Komponenten (105) zusammengesetzt wird, wobei das Konfigurieren die Schritte aufweist:
- Erstellung eines elektrischen Schaltplans der elektrischen Schaltanlage (104),
- Umwandeln des elektrischen Schaltplans in ein dreidimensionales Montagelayout des Schaltschrankinnenraums, insbesondere ein dreidimensionales Montageplattenlayout, das eine Anordnung der elektrischen und/oder elektronischen Komponenten (105) auf einer Montageplatte des Schaltschranks (200) repräsentiert,
- Modifizieren des erstellten dreidimensionalen Layouts zur Erzeugung mindestens eines alternativen dreidimensionalen Layouts, wobei eine Gütefunktion angewendet wird, die ein Extremum annimmt, wenn die elektrische Schaltanlage (104) hinsichtlich eines physikalischen Parameters optimiert ist, vorzugsweise hinsichtlich einer Packungsdichte der elektrischen und/oder elektronischen Komponenten (105), einer thermischen Belastung der Schaltanlagen (104), eines elektrischen Energieverbrauchs der Schaltanlage (104), einer Kabellänge für die Verdrahtung der elektrischen und/oder elektronischen Komponenten (105), und
- Erzeugen eines das alternative dreidimensionale Layout repräsentierenden dritten Datensatzes, Zuordnen der Schaltschrankkennzeichnung (201) dem dritten Datensatz und Hinterlegen des dritten Datensatzes für den Fernzugriff.

## Claims

1. A method for machining at least one switch cabinet (200), comprising the steps:
- providing at least one switch cabinet (200) which is constructed in several parts and comprises at least one removably mounted component (100);
- disassembling and removing the removably mounted component (100) from the switch cabinet (200);
- machining the disassembled and removed component (100) and providing the machined component (100) for reassembly on the associated switch cabinet (200); and
- re-assigning the machined component (100) provided for reassembly to the corresponding control cabinet,
wherein the at least one switch cabinet (200) has an individual machine-readable switch cabinet identification (201) and the at least one removably mounted component (100) has an individual machine-readable component identification (101), which are assigned to one another, wherein re-assigning of the component (100) to the switch cabinet (200) comprises machine-reading of the machine-readable identifications (201) and bringing together the component (100) and the switch cabinet (200) which have the mutually assigned identifications (101, 201),
and wherein providing or disassembling and removing the removably mounted component (100) comprises generating a first data set describing a target processing state of the component (100), the first data set being associated with the component (100) via the component identification (101), and storing the first data set for remote access,
**characterized in that**
the first data set comprises mechanical design information of a hole pattern (103) for a switchgear (104) to be created in the switch cabinet (200) or for the assembly of a switch cabinet air conditioner, wherein the manufacturing of the removably mounted component (100) comprises the mechanical processing of the removably mounted component (100) for manufacturing the hole pattern (103).

2. The method according to claim 1, in which providing of the at least one switch cabinet (200) comprises manufacturing of the switch cabinet (200), wherein during manufacturing of the switch cabinet (200) the removably mounted component (100) of the switch cabinet (200) with the component identification (101) and the at least one further component of the switch cabinet (200) with the switch cabinet identification (201) are manufactured independently of one another and after their manufacture are assigned to one another for the first time by reading in the identifications (101, 201).

3. The method according to claim 1, wherein generating the first data set describing the target machining state comprises storing of at least one machining step in the first data set which is required to transfer the component from its actual state to the target machining state.

4. The method according to one of claims 2 or 3, in which manufacturing of the switch cabinet (200) comprises the manufacturing of the removably mounted component (100) in series production, the method further comprising the steps:
- detecting the component identification (101) of the removably mounted component (100) in series production;
- reading the first data set and detecting the target machining state or at least one machining step;
- separating the removably mounted component (100) from the series production and feeding the removably mounted component (100) to a machining station, wherein in the machining station the at least one machining step and/or a further machining step is carried out in order to bring the removably mounted component (100) closer to the target machining state; and
- after the machining step has been carried out, reintegrating the removably mounted component (100) into series production.

5. The method according to one of claims 3 to 5, in which manufacturing of the switch cabinet (200) comprises manufacturing of the removably mounted component (100) in series production, the removably mounted component (100) passing through a plurality of machining stations, wherein at least one machining station
- the component identification (101) of the removably mounted component (100) is read out;
- the first data set assigned to the component identification (101) is recorded;
- at least one machining step is performed to bring the part closer to the target machining state;
- an updated machining state is stored in the first data set; and
- the first data set is stored for remote access.

6. The method according to claim 3, which further comprises generating a second data set which is assigned to the switch cabinet (200) via the switch cabinet identification (201) and is stored for remote access, wherein the second data set comprises a circuit diagram of a switchgear (104) to be produced or already produced in the switch cabinet (200), and wherein the second data set can be obtained from the first data set by modification, preferably by enrichment of the first data set.

7. The method according to claim 6, which comprises changing the circuit diagram according to a detected change of the switchgear (104) and updating the second data set so that the updated second data set comprises the changed circuit diagram.

8. The method according to Claim 7, in which the detection of a change in the switchgear (104) comprises the detection of component identifications (106) of the components (105) of the electrical switchgear (104), wherein a change in a component assembly of the electrical switchgear (104) is detected by comparing the detected component identifications (106) with the circuit diagram.

9. The method according to Claim 8, which comprises detecting an interior of the switch cabinet (200) at least partially optically or electromagnetically, preferably detecting a mounting side of a mounting plate on which the electrical switchgear (104) is arranged, wherein detecting comprises detecting of at least one component identification (106) of at least one component (105) of the switchgear (104), the detecting further comprising, in addition to detecting the component identification (106), detecting a location information of the component (105) relative to at least one further component (105) of the switchgear (104) with a further component identification (106).

10. The method according to one of the preceding claims, which further comprises:
- creating an electrical switchgear (104) in the switch cabinet (200) starting from a CAD design of the switchgear (104) which is assigned to the switch cabinet (200) via the switch cabinet identification (201), wherein data sheet information of electrical components (105) of the electrical switchgear (104) is linked with information on their interconnection in the electrical switchgear (104) and is stored in a central archive database under the switch cabinet identification (201) in at least one data set,
- technically approving the switchgear (104), whereby test and approval information of the switchgear (104) is added to the at least one data set, whereby a commissioning release for the switch cabinet (200) is triggered if the necessary test and approval information is complete, and
- commissioning of the switchgear (104), whereby commissioning information of the switchgear (104) is added to the at least one data set via a human-machine interface (400).

11. The method according to one of the preceding claims, which further comprises:
- reading in the switch cabinet identification (201) and providing a CAD construction of an electrical switchgear (104) to be formed in the switch cabinet (200), the CAD construction being assigned to the switch cabinet (200) via the switch cabinet identification (201), and reading in the CAD construction into a computer-aided assistance unit,
- fragmenting of the CAD design into individual assembly steps which build on one another by the computer-aided assistance unit for determining an efficient assembly step sequence, wherein the assembly step sequence comprises at least two successive wiring steps of in each case two components (105) of the electrical switchgear (104) or at least two successive component positioning steps of in each case two components (105) of the electrical switchgear (104).

12. The method according to claim 11, which further comprises:
- visualizing a manually executable assembly step of the assembly step sequence by a display unit installed at an assembly site which outputs image and/or text information as assembly instructions,
- performing the manually executable assembly step according to the displayed image and/or text information,
- acknowledging the completed assembly step via an input unit installed at the assembly site and logging the completion of the assembly step and calling up the next assembly step of the assembly step sequence,
- wherein, at the latest after execution of all assembly steps of the assembly step sequence, a protocol data set assigned to the switch cabinet identification (201) is generated and stored for remote access, which has a record of the completed assembly steps of the assembly step sequence.

13. The method according to one of the preceding claims, which further comprises the configuration of an electrical switchgear (104) for the switch cabinet, which is composed at least of a plurality of electrical and/or electronic components (105), wherein the configuration comprises the steps:
- preparing an electrical circuit diagram of the electrical switchgear (104),
- converting the electrical circuit diagram into a three-dimensional assembly layout of the switch cabinet interior, preferably a three-dimensional mounting plate layout representing an arrangement of the electrical and/or electronic components (105) on a mounting plate of the switch cabinet,
- modifying the three-dimensional layout produced to generate at least one alternative three-dimensional layout, wherein a quality function is applied which assumes an extremum if the electrical switchgear (104) is optimized with respect to a physical parameter, preferably with respect to a packing density of the electrical and/or electronic components (105), a thermal load on the switchgear (104), an electrical energy consumption of the switchgear (104), a cable length for wiring the electrical and/or electronic components (105), and
- creating a third data set representing the alternative three-dimensional layout, assigning the switch cabinet identification (201) to the third data set and storing the third data set for remote access.

## Revendications

1. Procédé pour l'usinage d'une armoire de commande (200), qui comprend les étapes suivantes :
- mise à disposition d'une armoire de commande (200), qui est constituée de plusieurs parties et qui comprend au moins un composant monté de manière amovible (100) ;
- démontage et retrait du composant monté de manière amovible (100) de l'armoire de commande (200) ;
- usinage du composant (100) démonté et retiré et mise à disposition du composant (100) usiné pour le remontage sur l'armoire de commande (200) correspondante ; et
- réattribution du composant (100) usiné mis à disposition pour le remontage à l'armoire de commande (200) correspondante,
dans lequel l'au moins une armoire de commande (200) présente une identification d'armoire de commande individuelle lisible par une machine (201) et l'au moins un composant monté de manière amovible (100) présente une identification de composant individuelle lisible par une machine (101), qui correspondent entre elles, dans lequel la réattribution du composant (100) à l'armoire de commande (200) comprend la lecture mécanique des identifications lisibles par une machine (201) et l'assemblage du composant (100) et de l'armoire de commande (200), qui présentent les identifications (101, 201) correspondantes entre elles,
et dans lequel la mise à disposition ou le démontage et le retrait du composant monté de manière amovible (100) comprend la génération d'un premier ensemble de données qui décrit un état d'usinage cible du composant (100), dans lequel le premier ensemble de données est attribué au composant (100) par l'intermédiaire de l'identification du composant (101), et l'enregistrement du premier ensemble de données pour un accès à distance,
**caractérisé en ce que**
le premier ensemble de données comprend des informations de construction mécaniques d'un gabarit de perçage (103) pour une installation de commutation (104) à installer dans l'armoire de commande ou pour le montage d'un appareil de climatisation d'armoire de commande, dans lequel la fabrication du composant monté de manière amovible (100) comprend l'usinage mécanique du composant monté de manière amovible (100) pour la fabrication du gabarit de perçage (103).

2. Procédé selon la revendication 1, dans lequel la mise à disposition de l'au moins une armoire de commande (200) comprend la fabrication de l'armoire de commande (200), dans lequel, lors de la fabrication de l'armoire de commande (200), le composant monté de manière amovible (100) de l'armoire de commande (200) avec l'identification de composant (101) et l'au moins un autre composant (203) de l'armoire de commande (200) avec l'identification d'armoire de commande (201) sont fabriqués indépendamment l'un de l'autre et sont attribués l'un à l'autre pour la première fois par la lecture des identifications (101, 201).

3. Procédé selon la revendication 1, dans lequel la génération du premier ensemble de données décrivant l'état d'usinage cible comprend l'enregistrement d'au moins une étape d'usinage dans le premier ensemble de données, qui est nécessaire pour faire passer le composant (100) de son état effectif à son état d'usinage cible.

4. Procédé selon l'une des revendications 2 ou 3, dans lequel la fabrication de l'armoire de commande (200) comprend la fabrication du composant monté de manière amovible (100) en série, dans lequel le procédé comprend en outre les étapes suivantes :
- détection de l'identification de composant (101) du composant monté de manière amovible (100) fabriqué en série ;
- lecture du premier ensemble de données et détection de l'état d'usinage cible ou de l'au moins une étape d'usinage ;
- sélection du composant monté de manière amovible (100) dans la fabrication en série et introduction du composant monté de manière amovible (100) dans une station d'usinage, dans lequel, dans la station d'usinage, l'au moins une étape d'usinage et/ou une autre étape d'usinage est exécutée, afin de rapprocher le composant monté de manière amovible (100) de l'état d'usinage cible ; et
- après l'exécution de l'étape d'usinage, réintroduction du composant monté de manière amovible (100) dans la fabrication en série.

5. Procédé selon l'une des revendications 2 à 4, dans lequel la fabrication de l'armoire de commande (200) comprend la fabrication du composant monté de manière amovible (100) en série, dans lequel le composant monté de manière amovible (100) traverse plusieurs stations d'usinage, dans lequel, au niveau d'au moins une station d'usinage
- l'identification de composant (101) du composant monté de manière amovible (100) est lue ;
- le premier ensemble de données correspondant à l'identification de composant (101) est détecté ;
- au moins une étape d'usinage est exécutée, afin de rapprocher le composant (100) de l'état d'usinage cible ;
- un état d'usinage actualisé est enregistré dans le premier ensemble de données ; et
- le premier ensemble de données est enregistré pour un accès à distance.

6. Procédé selon la revendication 3, qui comprend en outre la génération d'un deuxième ensemble de données, qui est attribué à l'armoire de commande (200) par l'intermédiaire de l'identification d'armoire de commande (201) et enregistré pour un accès à distance, dans lequel le deuxième ensemble de données comprend un plan de branchement d'une installation de commutation (104) à installer ou déjà installée dans l'armoire de commande et dans lequel le deuxième ensemble de données peut être obtenu à partir du premier ensemble de données par modification, plus particulièrement par l'enrichissement du premier ensemble de données.

7. Procédé selon la revendication 6, qui comprend la modification du plan de branchement en fonction d'une modification détectée de l'installation de commutation (104) et l'actualisation du deuxième ensemble de données, de façon à ce que le deuxième ensemble de données actualisé comprenne le plan de branchement modifié.

8. Procédé selon la revendication 7, dans lequel la détection d'une modification de l'installation de commutation (104) comprend la détection d'identifications de composants (106) des composants (105) de l'installation de commutation électrique (104), dans lequel, par l'intermédiaire d'une comparaison des identifications de composants (106) détectées avec le plan de branchement, une modification d'un équipement en composants de l'installation de commutation électrique (104) est détectée.

9. Procédé selon la revendication 8, qui comprend la détection au moins partiellement optique ou électromagnétique d'un espace interne de l'armoire de commande (200), plus particulièrement d'un côté de montage d'une plaque de montage sur laquelle l'installation de commutation électrique (104) est disposée, dans lequel la détection comprend la détection d'au moins une identification de composant (106) d'au moins un composant (105) de l'installation de commutation (104), dans lequel la détection comprend en outre, en plus de la détection de l'identification de composant (106), la détection d'une information de localisation du composant (105) par rapport à au moins un autre composant (105) de l'installation de commutation (104) avec une autre identification de composant (106).

10. Procédé selon l'une des revendications précédentes, qui comprend en outre :
- l'installation d'une installation de commutation électrique (104) dans l'armoire de commande (200) à partir d'une construction CAO de l'installation de commutation (104), qui est attribuée à l'armoire de commande (200) par l'intermédiaire de l'identification d'armoire de commande (201), dans lequel des informations de fiches techniques de composants électriques (105) de l'installation de commutation électrique (104) sont combinées avec des informations sur leur branchement dans l'installation de commutation électrique (104) et sont enregistrées dans une base de données d'archives sous l'identification d'armoire de commande (201) dans au moins un ensemble de données,
- retrait technique de l'installation de commutation (104), dans lequel, à l'au moins un ensemble de données, sont ajoutées des informations de test et de retrait de l'installation de commutation (104), dans lequel, lorsque les informations de test et de retrait sont exhaustives, une autorisation de mise en service est déclenchée pour l'armoire de commande (200) et
- mise en service de l'installation de commutation (104), dans lequel, à l'au moins un ensemble de données, sont ajoutées des informations de mise en service de l'installation de commutation (104) par l'intermédiaire d'une interface homme-machine (400).

11. Procédé selon l'une des revendications précédentes, qui comprend en outre :
- la lecture de l'identification d'armoire de commande (201) et la mise à disposition d'une construction CAO d'une installation de commutation électrique (104) à réaliser dans l'armoire de commande (200), dans lequel la construction CAO est attribuée à l'armoire de commande (200) par l'intermédiaire de l'identification d'armoire de commande (201) et l'enregistrement de la construction CAO dans une unité d'assistance informatique,
- décomposition de la construction CAO en étapes de montages individuelles par l'unité d'assistance informatique pour la détermination d'une séquence d'étapes de montage efficace, dans lequel la séquence d'étapes de montage comprend au moins deux étapes de câbles successives de respectivement deux composants (105) de l'installation de commutation électrique (104) ou au moins deux étapes de positionnement de composants successives de respectivement deux composants (105) de l'installation de commutation électrique (104).

12. Procédé selon la revendication 11, qui comprend en outre :
- la visualisation d'une étape de montage exécutable manuellement de la séquence d'étapes de montage par une unité d'affichage installée sur le site de montage, qui émet des informations graphiques et/ou textuelles sous la forme d'instructions de montage,
- exécution de l'étape de montage exécutable manuellement selon les informations graphiques et/ou textuelles affichées,
- acquittement de l'étape de montage effectuée par l'intermédiaire d'une unité d'entrée installée sur le site de montage et enregistrement de l'exécution de l'étape de montage et appel d'une étape de montage suivante de la séquence d'étapes de montage,
- dans lequel, au plus tard après l'exécution de toutes les étapes de montage de la séquence d'étapes de montage, un ensemble de données de protocole correspondant à l'identification d'armoire de commande (201) est généré et enregistré pour l'accès à distance, qui comprend un enregistrement des étapes de montage exécutées de la séquence d'étapes de montage.

13. Procédé selon l'une des revendications précédentes, qui comprend en outre la configuration d'une installation de commutation électrique (104) pour l'armorie de commande (200), qui est constituée d'au moins plusieurs composants électriques et/ou électroniques (105), dans lequel la configuration comprend les étapes suivantes :
- création d'un plan de branchement électrique de l'installation de commutation électrique (104),
- conversion du plan de branchement électrique en un agencement de montage tridimensionnel de l'espace interne de l'armoire de commande, plus particulièrement un agencement de plaque de montage tridimensionnel, qui représente une disposition des composants électriques et/ou électroniques (105) sur une plaque de montage de l'armoire de commande (200),
- modification de l'agencement tridimensionnel pour la création d'au moins un agencement tridimensionnel alternatif, dans lequel une fonction de qualité est appliquée qui adopte un extremum lorsque l'installation de commutation électrique (104) est optimisée en ce qui concerne un paramètre physique, de préférence en ce qui concerne une densité de compactage des composants électriques et/ou électroniques (105), une charge thermique des installations de commutation (104), une consommation d'énergie électrique de l'installation de commutation (104), une longueur de câble pour le câblage des composants électriques et/ou électroniques (105), et
- création d'un troisième ensemble de données représentant l'agencement tridimensionnel alternatif, attribution de l'identification d'armoire de commande (201) au troisième ensemble de données et enregistrement du troisième ensemble de données pour l'accès à distance.
